(19) Europäisches Patentamt / European Patent Office / Office européen des brevets

(11) EP 3 184 563 A1

(12) # EUROPEAN PATENT APPLICATION
published in accordance with Art. 153(4) EPC

(43) Date of publication:
**28.06.2017 Bulletin 2017/26**

(21) Application number: **15834202.2**

(22) Date of filing: **17.07.2015**

(51) Int Cl.:
***C08F 299/00*** *(2006.01)* ***C08F 8/14*** *(2006.01)*
***C08F 297/02*** *(2006.01)*

(86) International application number:
**PCT/JP2015/070563**

(87) International publication number:
**WO 2016/027602 (25.02.2016 Gazette 2016/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **19.08.2014 JP 2014166484**

(71) Applicant: **Kuraray Co., Ltd.**
**Okayama 710-8622 (JP)**

(72) Inventors:
- **SHIMIZU, Seiya**
  **Tsukuba-shi**
  **Ibaraki 305-0841 (JP)**
- **IDA, Hirotsugu**
  **Tsukuba-shi**
  **Ibaraki 305-0841 (JP)**
- **MAEKAWA, Kazuhiko**
  **Tsukuba-shi**
  **Ibaraki 305-0841 (JP)**
- **SHACHI, Kenji**
  **Tsukuba-shi**
  **Ibaraki 305-0841 (JP)**
- **TAKAHASHI, Katsuei**
  **Tsukuba-shi**
  **Ibaraki 305-0841 (JP)**

(74) Representative: **Müller-Boré & Partner**
**Patentanwälte PartG mbB**
**Friedenheimer Brücke 21**
**80639 München (DE)**

(54) ## ACTIVE ENERGY RAY-CURABLE COMPOSITION

(57) The invention provides active energy ray curable compositions which exhibit good curability with active energy rays and which have a low viscosity to attain excellent application properties when applied as materials such as adhesives or coatings onto substrates and can give highly flexible cured products upon irradiation with active energy rays. An active energy ray curable composition includes a (meth) acrylic triblock copolymer (A) including a (meth) acrylic polymer block (s) (aA) having an active energy ray curable group containing a partial structure represented by the following general formula (1), and a (meth)acrylic polymer block(s) (bA) having no active energy ray curable groups, and a (meth) acrylic diblock copolymer (B) including a (meth) acrylic polymer block (aB) having an active energy ray curable group containing a partial structure represented by the following general formula (1), and a (meth)acrylic polymer block (bB) having no active energy ray curable groups, the composition having a ratio of Mn (bB)/Mn (bA) in the range of 0.2 to 2.0 wherein Mn (bB) is the number average molecular weight of the (meth)acrylic polymer block (bB) present in the (meth)acrylic diblock copolymer (B), and Mn (bA) is the number average molecular weight of the (meth) acrylic polymer block (bA) present in the (meth)acrylic triblock copolymer (A).

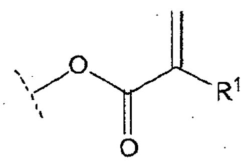 (1)

(In the formula, $R^1$ is a hydrogen atom or a hydrocarbon group having 1 to 20 carbon atoms.)

EP 3 184 563 A1

**Description**

TECHNICAL FIELD

The present invention relates to polymer compositions having curability with active energy rays. More particularly, the invention relates to active energy ray curable compositions which can be cured at a high rate by the application of active energy rays without deformation to give cured products having excellent transparency and flexibility.

BACKGROUND ART

Active energy ray curable compositions are known which are cured when irradiated with active energy rays such as UV lights or electron beams. Such curable compositions are used in applications including adhesives, pressure-sensitive adhesives, paints, inks, coatings and stereolithographic materials.

(Meth)acrylic block copolymers including methacrylic polymer blocks and acrylic polymer blocks have excellent properties such as adhesion, shaping properties and weather resistance. These characteristics are expected to broaden the use of the copolymers to applications such as pressure-sensitive adhesives, adhesives, coating materials and various shaping materials.

Further, active energy ray curable compositions that include a (meth)acrylic block copolymer including a methacrylic polymer block and an acrylic polymer block and having active energy ray curable functional groups are known to exhibit the combined properties of the above types of materials (see Patent Document 1).

In the field of pressure-sensitive adhesives which are one of the use applications of active energy ray curable compositions, a speedup of the coating step is recently demanded in order to enhance the productivity of pressure-sensitive adhesives. Some of the general approaches to speeding up the coating step are to reduce the molecular weight of a polymer with active energy ray curable functional groups present in the active energy ray curable composition, and to add various plasticizers. However, the reduction in the molecular weight of a polymer with active energy ray curable functional groups results in adverse effects such as poor flexibility of cured products and a decrease in adhesion. The addition of plasticizers can sometimes cause problems such as peripheries of the pressure-sensitive adhesives being contaminated due to the migration of plasticizers, adverse effects on adhesion, a decrease in flexibility due to the leaching out of plasticizers over a long term, and a decrease in curing rate by the lowering of the concentration of active energy ray curable functional groups. When the surface of adherends is irregular or curved, flexibility is required so that the materials can change the shape sufficiently and follow the contour of the adherends. In general, such flexibility is imparted by the addition of various plasticizers. This approach, however, often encounters with the similar problems as described above.

CITATION LIST

PATENT LITERATURE

Patent Document 1: JP-A-2011-184678

SUMMARY OF INVENTION

TECHNICAL PROBLEM

An object of the present invention is to provide active energy ray curable compositions which exhibit good curability with active energy rays and which have a low viscosity to attain excellent application properties when applied as materials such as adhesives or coatings onto substrates and can give highly flexible cured products upon irradiation with active energy rays.

SOLUTION TO PROBLEM

To achieve the above object, the present invention provides the following:

[1] An active energy ray curable composition including a (meth)acrylic triblock copolymer (A) including a (meth)acrylic polymer block(s) (aA) having an active energy ray curable group containing a partial structure represented by the following general formula (1) (hereinafter, written as partial structure (1)"), and a (meth) acrylic polymer block (s) (bA) having no active energy ray curable groups, and a (meth) acrylic diblock copolymer (B) including a (meth) acrylic polymer block (aB) having an active energy ray curable group containing a partial structure (1), and a (meth)

acrylic polymer block (bB) having no active energy ray curable groups, the composition having a ratio of Mn (bB)/Mn (bA) in the range of 0. 2 to 2. 0 wherein Mn (bB) is the number average molecular weight of the (meth)acrylic polymer block (bB) present in the (meth) acrylic diblock copolymer (B), and Mn (bA) is the number average molecular weight per block of the (meth) acrylic polymer block(s) (bA) present in the (meth) acrylic triblock copolymer (A).
[2] The active energy ray curable composition described in [1], further including a photopolymerization initiator.
[3] The active energy ray curable composition described in [1] or [2], wherein the active energy ray curable groups present in the (meth) acrylic triblock copolymer (A) and in the (meth)acrylic diblock copolymer (B) contain a partial structure represented by the following general formula (2) (hereinafter, written as "partial structure (2)").

[Chem. 1]

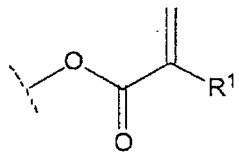

(1)

(In the formula, $R^1$ is a hydrogen atom or a hydrocarbon group having 1 to 20 carbon atoms.)

[Chem. 2]

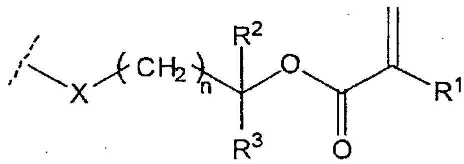

(2)

(In the formula, $R^1$ is a hydrogen atom or a hydrocarbon group having 1 to 20 carbon atoms, $R^2$ and $R^3$ are each independently a hydrocarbon group having 1 to 6 carbon atoms, X is O, S or $N(R^6)$ ($R^6$ is a hydrogen atom or a hydrocarbon group having 1 to 6 carbon atoms) and n is an integer of 1 to 20.)

ADVANTAGEOUS EFFECTS OF INVENTION

The active energy ray curable compositions of the present invention are curable with active energy rays and have a low viscosity to attain excellent application properties when the compositions as materials such as adhesives or coatings are applied onto substrates and cured with active energy rays. The curing results in highly flexible cured products.

DESCRIPTION OF EMBODIMENTS

Hereinbelow, the present invention will be described in detail.
An active energy ray curable composition of the invention includes a (meth)acrylic triblock copolymer (A). In the specification, the term "(meth)acrylic" is a general term indicating both "methacrylic" and "acrylic". The term "(meth)acryloyl" described later is a general term indicating both "methacryloyl" and "acryloyl", and the term "(meth)acrylate" described later is a general term indicating both "methacrylate" and "acrylate".
The (meth)acrylic triblock copolymer (A) includes a (meth)acrylic polymer block (aA) which has an active energy ray curable group containing a partial structure (1).
The active energy ray curable group containing a partial structure (1) exhibits polymerizability when irradiated with active energy rays. Consequently, the active energy ray curable composition of the invention is cured into a cured product by the application of active energy rays. In the present specification, the term active energy rays means light rays, electromagnetic waves, particle rays and combinations thereof. Examples of the light rays include far-ultraviolet lights, ultraviolet lights (UV), near-ultraviolet lights, visible lights and infrared lights. Examples of the electromagnetic waves include X-rays and $\gamma$-rays. Examples of the particle rays include electron beams (EB), proton beams ($\alpha$ beams) and neutron beams. From such points of view as curing rate, and the availability and price of irradiators, preferred active energy rays are ultraviolet lights and electron beams, with ultraviolet lights being more preferable.
The partial structure (1) is represented by the following general formula (1):

[Chem. 3]

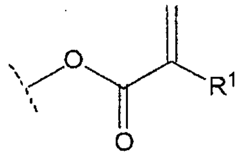

(1)

(In the formula, $R^1$ is a hydrogen atom or a hydrocarbon group having 1 to 20 carbon atoms.)

Examples of the hydrocarbon groups with 1 to 20 carbon atoms represented by $R^1$ in the general formula (1) include alkyl groups such as methyl group, ethyl group, n-propyl group, isopropyl group, n-butyl group, isobutyl group, sec-butyl group, t-butyl group, 2-methylbutyl group, 3-methylbutyl group, 2-ethylbutyl group, 3-ethylbutyl group, 2,2-dimethylbutyl group, 2,3-dimethylbutyl group, n-pentyl group, neopentyl group, n-hexyl group, 2-methylpentyl group, 3-methylpentyl group and n-decyl group; cycloalkyl groups such as cyclopropyl group, cyclobutyl group, cyclopentyl group and cyclohexyl group; aryl groups such as phenyl group and naphthyl group; and aralkyl groups such as benzyl group and phenylethyl group. In particular, from the point of view of active energy ray curability, methyl group and ethyl group are preferable, and methyl group is most preferable.

When the active energy ray curable composition of the invention used as an adhesive, a coating or the like is applied onto a substrate and is cured with an active energy ray, a need often arises for the cured product, after its service, to be separated for disposal or other purpose. It is therefore desirable that such a cured product be easily released from the substrate by, for example, hygrothermal decomposition. To ensure that good hygrothermal decomposability will be exhibited after curing, a preferred active energy ray curable group containing a partial structure (1) is one containing a partial structure (2).

The partial structure (2) is represented by the following general formula (2):

[Chem. 4]

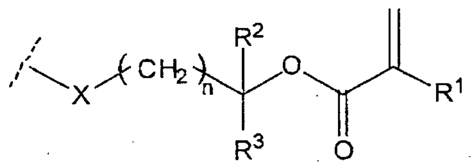

(2)

(In the formula, $R^1$ is a hydrogen atom or a hydrocarbon group having 1 to 20 carbon atoms, $R^2$ and $R^3$ are each independently a hydrocarbon group having 1 to 6 carbon atoms, X is O, S or $N(R^6)$ ($R^6$ is a hydrogen atom or a hydrocarbon group having 1 to 6 carbon atoms) and n is an integer of 1 to 20.)

Specific examples and preferred examples of the hydrocarbon groups with 1 to 20 carbon atoms represented by $R^1$ in the general formula (2) include similar hydrocarbon groups as those represented by $R^1$ in the general formula (1).

Examples of the hydrocarbon groups with 1 to 6 carbon atoms represented by $R^2$ and $R^3$ independently in the general formula (2) include alkyl groups such as methyl group, ethyl group, n-propyl group, isopropyl group, n-butyl group, isobutyl group, sec-butyl group, t-butyl group, 2-methylbutyl group, 3-methylbutyl group, 2-ethylbutyl group, 3-ethylbutyl group, 2,2-dimethylbutyl group, 2,3-dimethylbutyl group, n-pentyl group, neopentyl group, n-hexyl group, 2-methylpentyl group and 3-methylpentyl group; cycloalkyl groups such as cyclopropyl group, cyclobutyl group, cyclopentyl group and cyclohexyl group; and aryl groups such as phenyl group. In particular, from the points of view of active energy ray curability and hygrothermal decomposability, methyl group and ethyl group are preferable, and methyl group is most preferable.

In the general formula (2), X is O, S or $N(R^6)$ ($R^6$ is a hydrogen atom or a hydrocarbon group having 1 to 6 carbon atoms) and is preferably O for easy control of polymerization. When X is $N(R^6)$, $R^6$ represents a hydrocarbon group having 1 to 6 carbon atoms, with examples including alkyl groups such as methyl group, ethyl group, n-propyl group, isopropyl group, n-butyl group, isobutyl group, sec-butyl group, t-butyl group, 2-methylbutyl group, 3-methylbutyl group, 2-ethylbutyl group, 3-ethylbutyl group, 2,2-dimethylbutyl group, 2,3-dimethylbutyl group, n-pentyl group, neopentyl group, n-hexyl group, 2-methylpentyl group and 3-methylpentyl group; cycloalkyl groups such as cyclopropyl group, cyclobutyl group, cyclopentyl group and cyclohexyl group; and phenyl groups.

In the general formula (2), n is an integer of 1 to 20 and, from the points of view of the fluidity and curing rate

of the active energy ray curable composition, is preferably 2 to 5.

In the (meth) acrylic polymer block (aA), the content of the partial structures (1) is preferably in the range of 0.2 to 100 mol%, more preferably in the range of 10 to 90 mol%, and still more preferably in the range of 25 to 80 mol% relative to all the monomer units forming the (meth) acrylic polymer block (aA).

The (meth)acrylic polymer block (aA) includes monomer units formed by polymerizing a monomer(s) including a (meth)acrylate ester. The (meth)acrylate ester may be a monofunctional (meth) acrylate ester having one (meth) acryloyl group, or a polyfunctional (meth) acrylate ester having two or more (meth)acryloyl groups.

Examples of the monofunctional (meth)acrylate esters capable of forming the (meth)acrylic polymer blocks (aA) include methyl (meth)acrylate, ethyl (meth)acrylate, propyl (meth)acrylate, isopropyl (meth)acrylate, n-butyl (meth)acrylate, t-butyl (meth)acrylate, cyclohexyl (meth)acrylate, 2-ethylhexyl (meth)acrylate, isobornyl (meth)acrylate, dodecyl (meth)acrylate, 2-methoxyethyl (meth)acrylate, 2-hydroxyethyl (meth)acrylate, 2-hydroxybutyl (meth)acrylate, trimethoxysilylpropyl (meth)acrylate, 2-aminoethyl (meth)acrylate, N,N-dimethylaminoethyl (meth)acrylate, N,N-diethylaminoethyl (meth)acrylate, phenyl (meth)acrylate, naphthyl (meth)acrylate, 2-(trimethylsilyloxy)ethyl (meth)acrylate, 3-(trimethylsilyloxy)propyl (meth)acrylate, glycidyl (meth)acrylate, γ-((meth)acryloyloxypropyl)trimethoxysilane, ethylene oxide adducts of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate and 2-perfluorohexadecylethyl (meth)acrylate. Of these, alkyl methacrylate esters having an alkyl group with 5 or less carbon atoms are preferable, with examples including methyl methacrylate, ethyl methacrylate, propyl methacrylate, isopropyl methacrylate, n-butyl methacrylate and t-butyl methacrylate. Methyl methacrylate is most preferable.

The polyfunctional (meth) acrylate ester for forming the (meth)acrylic polymer block (aA) may be a difunctional (meth)acrylate ester represented by the general formula (3) below (hereinafter, written as the "di(meth)acrylate (3)"). The use of such an ester is advantageous in that living anionic polymerization under conditions described later takes place in such a manner that one of the (meth) acryloyloxy groups (the (meth)acryloyloxy group represented by "$CH_2=C(R^5)C(O)O$" in the general formula (3)) is polymerized selectively to afford a methacrylic polymer block (aA) which has an active energy ray curable group containing a partial structure (2) in which $R^1$ is $R^4$ and X is O.

[Chem. 5]

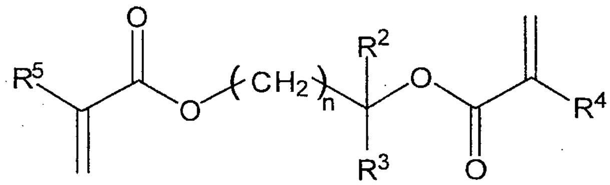

(3)

(In the formula, $R^2$ and $R^3$ are each independently a hydrocarbon group having 1 to 6 carbon atoms, $R^4$ and $R^5$ are each independently a hydrogen atom or a methyl group, and n is an integer of 1 to 20.)

Examples of the hydrocarbon groups with 1 to 6 carbon atoms which may be represented by $R^2$ and $R^3$ in the general formula (3) include similar groups as those represented by $R^2$ and $R^3$ in the general formula (2). From the points of view of the fluidity and curing rate of the active energy ray curable composition, n in the general formula (3) is preferably 2 to 5.

To enhance polymerization selectivity, $R^4$ in the general formula (3) is preferably a methyl group. Because of easy availability of the di (meth) acrylate (3), it is preferable that $R^4$ and $R^5$ be the same as each other. From these points of view, it is most preferable that $R^4$ and $R^5$ be both methyl groups. Examples of the di(meth)acrylates (3) include 1,1-dimethylpropane-1,3-diol di(meth)acrylate, 1,1-dimethylbutane-1,4-diol di(meth)acrylate, 1,1-dimethylpentane-1,5-diol di(meth)acrylate, 1,1-dimethylhexane-1,6-diol di(meth)acrylate, 1,1-diethylpropane-1,3-diol di(meth)acrylate, 1,1-diethylbutane-1,4-diol di(meth)acrylate, 1,1-diethylpentane-1,5-diol di(meth)acrylate and 1,1-diethylhexane-1,6-diol di(meth)acrylate. 1,1-Dimethylpropane-1,3-diol dimethacrylate, 1,1-dimethylbutane-1,4-diol dimethacrylate, 1,1-dimethylpentane-1,5-diol dimethacrylate, 1,1-dimethylhexane-1,6-diol dimethacrylate, 1,1-diethylpropane-1,3-diol dimethacrylate, 1,1-diethylbutane-1,4-diol dimethacrylate, 1,1-diethylpentane-1,5-diol dimethacrylate and 1,1-diethylhexane-1,6-diol dimethacrylate are preferable. 1,1-Dimethylpropane-1,3-diol dimethacrylate, 1,1-dimethylbutane-1,4-diol dimethacrylate, 1,1-dimethylpentane-1,5-diol dimethacrylate and 1,1-dimethylhexane-1,6-diol dimethacrylate are more preferable.

The (meth)acrylate esters may be used singly, or two or more may be used in combination.

In the (meth) acrylic polymer block (aA), the content of the monomer units derived from the (meth)acrylate ester

is preferably in the range of 90 to 100 mol%, and more preferably in the range of 95 to 100 mol%, and may be 100 mol% relative to all the monomer units forming the (meth) acrylic polymer block (aA). When the (meth)acrylic polymer block (aA) includes monomer units derived from the di(meth)acrylate (3), the content of the monomer units derived from the di (meth) acrylate (3) is preferably in the range of 0.2 to 100 mol%, more preferably in the range of 10 to 90 mol%, and still more preferably in the range of 25 to 80 mol% relative to all the monomer units forming the (meth)acrylic polymer block (aA). The total content of the monomer units derived from methyl methacrylate and the monomer units derived from the di(meth)acrylate (3) is preferably in the range of 80 to 100 mol%, more preferably in the range of 90 to 100 mol%, and still more preferably in the range of 95 to 100 mol%, and may be 100 mol% relative to all the monomer units forming the (meth) acrylic polymer block (aA).

The (meth) acrylic polymer block (aA) may include monomer units derived from a monomer other than the (meth)acrylate esters described above. Examples of such additional monomers include α-alkoxyacrylate esters such as methyl α-methoxyacrylate and methyl α-ethoxyacrylate; crotonate esters such as methyl crotonate and ethyl crotonate; 3-alkoxyacrylate esters such as 3-methoxyacrylate esters; acrylamides such as N-isopropylacrylamide, N-t-butylacrylamide, N,N-dimethylacrylamide and N,N-diethylacrylamide; methacrylamides such as N-isopropylmethacrylamide, N-t-butylmethacrylamide, N,N-dimethylmethacrylamide and N,N-diethylmethacrylamide; methyl 2-phenylacrylate, ethyl 2-phenylacrylate, n-butyl 2-bromoacrylate, methyl 2-bromomethylacrylate, ethyl 2-bromomethylacrylate, methyl vinyl ketone, ethyl vinyl ketone, methyl isopropenyl ketone and ethyl isopropenyl ketone. These additional monomers may be used singly, or two or more may be used in combination.

In the (meth) acrylic polymer block (aA), the content of the monomer units derived from the additional monomer is preferably not more than 10 mol%, and more preferably not more than 5 mol% relative to all the monomer units forming the (meth)acrylic polymer block (aA).

The Mn per block of the (meth)acrylic polymer block(s) (aA) (Mn (aA)) is not particularly limited but, from points of view such as the handleability, fluidity and mechanical characteristics of the obtainable active energy ray curable composition, is preferably in the range of 500 to 1,000,000, and more preferably in the range of 1,000 to 300,000. In the specification, the Mn means the number average molecular weight measured by gel permeation chromatography (GPC) relative to polystyrene standards. There may be two (meth) acrylic polymer blocks (aA) in the (meth)acrylic triblock copolymer (A) and, in such a case, the characteristics of the polymer blocks such as molecular weights and monomer unit ratios may be the same as or different from each other.

The (meth)acrylic triblock copolymer (A) includes a (meth)acrylic polymer block (bA) having no active energy ray curable groups.

In the specification, the term active energy ray curable groups means functional groups which exhibit polymerizability when irradiated with the active energy rays described hereinabove. Examples of the active energy ray curable groups include functional groups having an ethylenic double bond (in particular, an ethylenic double bond represented by the general formula $CH_2$=CHR- (wherein R is an alkyl group or a hydrogen atom)) such as (meth) acryloyl group, (meth) acryloyloxy group, vinyl group, allyl group, vinylether group, 1,3-dienyl group and styryl group; epoxy group, oxetanyl group, thiol group and maleimide group.

The (meth) acrylic polymer block (bA) is a polymer block which includes monomer units formed by polymerizing a monomer(s) including a (meth) acrylate ester and has no active energy ray curable groups described hereinabove.

Examples of the (meth)acrylate esters include monofunctional acrylate esters such as methyl acrylate, ethyl acrylate, n-propyl acrylate, isopropyl acrylate, n-butyl acrylate, t-butyl acrylate, cyclohexyl acrylate, 2-ethylhexyl acrylate, isobornyl acrylate, dodecyl acrylate, trimethoxysilylpropyl acrylate, N,N-dimethylaminoethyl acrylate, N,N-diethylaminoethyl acrylate, 2-methoxyethyl acrylate, phenyl acrylate, naphthyl acrylate, 2-(trimethylsilyloxy)ethyl acrylate and 3-(trimethylsilyloxy)propyl acrylate; and monofunctional methacrylate esters such as methyl methacrylate, ethyl methacrylate, n-propyl methacrylate, isopropyl methacrylate, n-butyl methacrylate, t-butyl methacrylate, cyclohexyl methacrylate, 2-ethylhexyl methacrylate, isobornyl methacrylate, dodecyl methacrylate, trimethoxysilylpropyl methacrylate, N,N-dimethylaminoethyl methacrylate, N,N-diethylaminoethyl methacrylate, 2-methoxyethyl methacrylate, phenyl methacrylate, naphthyl methacrylate, 2-(trimethylsilyloxy)ethyl methacrylate and 3-(trimethylsilyloxy)propyl methacrylate. Of these, preferred (meth)acrylate esters are monofunctional alkyl acrylate esters having an alkyl group with 4 or more carbon atoms, such as n-butyl acrylate, t-butyl acrylate, 2-ethylhexyl acrylate and dodecyl acrylate; and monofunctional alkyl methacrylate esters having an alkyl group with 6 or more carbon atoms, such as 2-ethylhexyl methacrylate and dodecyl methacrylate. The (meth)acrylate esters may be used singly, or two or more may be used in combination.

In the (meth) acrylic polymer block (bA), the content of the monomer units derived from the (meth)acrylate ester is preferably not less than 90 mol%, and more preferably not less than 95 mol% relative to all the monomer units forming the (meth)acrylic polymer block (bA).

The (meth) acrylic polymer block (bA) may include monomer units derived from a monomer other than the (meth)acrylate esters described above. Examples of such additional monomers include α-alkoxyacrylate esters such as methyl α-methoxyacrylate and methyl α-ethoxyacrylate; crotonate esters such as methyl crotonate and ethyl crotonate; 3-alkoxyacrylate esters such as 3-methoxyacrylate esters; acrylamides such as N-isopropylacrylamide, N-t-butylacrylamide, N,N-dimethylacrylamide and N,N-diethylacrylamide; methacrylamides such as N-isopropylmethacrylamide, N-t-butylmethacrylamide, N,N-dimethylmethacrylamide and N,N-diethylmethacrylamide; methyl 2-phenylacrylate, ethyl 2-phenylacrylate, n-butyl 2-bromoacrylate, methyl 2-bromomethylacrylate, ethyl 2-bromomethylacrylate, methyl vinyl ketone, ethyl vinyl ketone, methyl isopropenyl ketone and ethyl isopropenyl ketone. These additional monomers may be used singly, or two or more may be used in combination.

In the (meth) acrylic polymer block (bA), the content of the monomer units derived from the additional monomer is preferably not more than 10 mol%, and more preferably not more than 5 mol% relative to all the monomer units forming the (meth)acrylic polymer block (bA).

The Mn per block of the (meth)acrylic polymer block(s) (bA) (Mn (bA)) is not particularly limited but, from points of view such as the handleability, fluidity and mechanical characteristics of the obtainable (meth)acrylic triblock copolymer (A), is preferably in the range of 3, 000 to 2, 000, 000, and more preferably in the range of 5, 000 to 1,000,000. There may be two (meth)acrylic polymer blocks (bA) in the (meth) acrylic triblock copolymer (A) and, in such a case, the characteristics of the polymer blocks such as molecular weights and monomer unit ratios may be the same as or different from each other.

The (meth)acrylic triblock copolymer (A) is a triblock copolymer including at least one (meth)acrylic polymer block (aA) and at least one (meth) acrylic polymer block (bA). From points of view such as the curing rate and ease in the production of the (meth) acrylic triblock copolymer (A), the copolymer is preferably a triblock copolymer including two (meth)acrylic polymer blocks (aA) each bonded to the ends of one (meth) acrylic polymer block (bA).

In the (meth)acrylic triblock copolymer (A), the ratio of the total mass of the (meth)acrylic polymer block(s) (aA) to the total mass of the (meth)acrylic polymer block(s) (bA) ((meth)acrylic polymer block(s) (aA):(meth)acrylic polymer block(s) (bA)) is not particularly limited but is preferably 90:10 to 5:95. When the proportion of the (meth)acrylic polymer block(s) (aA) in the (meth)acrylic triblock copolymer (A) is 5 mass% or above, good curability with active energy rays is obtained. Good viscoelasticity is obtained when the proportion is 90 mass% or less.

The Mn of the (meth)acrylic triblock copolymer (A) (Mn (A)) is not particularly limited but, from points of view such as the handleability, fluidity and mechanical characteristics of the inventive active energy ray curable composition, is preferably in the range of 4,000 to 4,000,000, and more preferably in the range of 7,000 to 2,000,000.

The molecular weight distribution, namely, the weight average molecular weight/number average molecular weight (Mw/Mn) of the (meth)acrylic triblock copolymer (A) is preferably in the range of 1.02 to 2.00, more preferably in the range of 1.05 to 1.80, and still more preferably in the range of 1.10 to 1.50. In the specification, the Mw means the weight average molecular weight measured by gel permeation chromatography (GPC) relative to polystyrene standards.

In the (meth) acrylic triblock copolymer (A), the content of the partial structures (1) is preferably in the range of 0.1 to 20 mol%, more preferably in the range of 2 to 15 mol%, and still more preferably in the range of 3 to 10 mol% relative to all the monomer units forming the (meth)acrylic triblock copolymer (A).

From the point of view of curing rate, the number of the partial structures (1) present in the (meth)acrylic triblock copolymer (A) is preferably not less than 4, and more preferably not less than 8 per molecule of the polymer.

When the (meth)acrylic triblock copolymer (A) is a triblock copolymer including two (meth)acrylic polymer blocks (aA) each bonded to the ends of one (meth) acrylic polymer block (bA), the (meth) acrylic polymer blocks (aA) may have the active energy ray curable groups containing the partial structure (1), at the ends of the (meth) acrylic triblock copolymer (A) or in side chains of the (meth)acrylic polymer blocks (aA). To ensure that as many partial structures (1) as desired will be introduced, it is preferable that such curable groups be located at least in side chains of the (meth)acrylic polymer blocks (aA).

The active energy ray curable composition of the invention includes a (meth)acrylic diblock copolymer (B).

The (meth)acrylic diblock copolymer (B) includes a (meth)acrylic polymer block (aB) which has an active energy ray curable group containing a partial structure (1) described above. Specific examples and preferred examples of $R^1$ in the formula (1) are similar as described with respect to the (meth)acrylic polymer block (aA).

To ensure that excellent hygrothermal decomposability will be exhibited after curing, a preferred active energy ray curable group containing a partial structure (1) is one containing a partial structure (2). Specific examples and preferred examples of $R^2$ and $R^3$ in the partial structure (2) represented by the general formula (2) are similar to those described with respect to the (meth) acrylic polymer block (aA). The same applies to specific examples and preferred examples of the hydrocarbon groups with 1 to 20 carbon atoms represented by $R^1$ in the partial structure (2) of the general formula (2), specific examples of the hydrocarbon groups with 1 to 6 carbon atoms represented by $R^6$ in $N(R^6)$ represented by X, preferred examples of X, and preferred examples of n.

In the (meth)acrylic polymer block (aB), the content of the partial structures (1) is preferably in the range of 0.2 to 100 mol%, more preferably in the range of 10 to 90 mol%, and still more preferably in the range of 25 to 80 mol% relative to all the monomer units forming the (meth) acrylic polymer block (aB).

The (meth)acrylic polymer block (aB) includes monomer units formed by polymerizing a monomer(s) including a (meth)acrylate ester. The (meth)acrylate ester may be a monofunctional (meth)acrylate ester having one (meth)acryloyl group, or a polyfunctional (meth) acrylate ester having two or more (meth)acryloyl groups. Specific examples and preferred

examples of the monofunctional (meth)acrylate esters and the polyfunctional (meth)acrylate esters are similar to those described with respect to the (meth) acrylic polymer block (aA). The (meth)acrylate esters may be used singly, or two or more may be used in combination.

In the (meth) acrylic polymer block (aB), the content of the monomer units derived from the (meth)acrylate ester is preferably in the range of 90 to 100 mol%, and more preferably in the range of 95 to 100 mol%, and may be 100 mol% relative to all the monomer units forming the (meth) acrylic polymer block (aB). When the (meth)acrylic polymer block (aB) includes monomer units derived from a di (meth) acrylate (3), the content of the monomer units derived from the di(meth)acrylate (3) is preferably in the range of 0.2 to 100 mol%, more preferably in the range of 10 to 90 mol%, and still more preferably in the range of 25 to 80 mol% relative to all the monomer units forming the (meth)acrylic polymer block (aA). The total content of the monomer units derived from methyl methacrylate and the monomer units derived from a di(meth)acrylate (3) is preferably in the range of 80 to 100 mol%, more preferably in the range of 90 to 100 mol%, and still more preferably in the range of 95 to 100 mol%, and may be 100 mol% relative to all the monomer units forming the (meth) acrylic polymer block (aB).

The (meth) acrylic polymer block (aB) may include monomer units derived from a monomer other than the (meth)acrylate esters described above. Specific examples and preferred examples of the additional monomers are similar to those described with respect to the (meth) acrylic polymer block (aA). Such additional monomers may be used singly, or two or more may be used in combination. In the (meth) acrylic polymer block (aB), the content of the monomer units derived from the additional monomer is preferably not more than 10 mol%, and more preferably not more than 5 mol% relative to all the monomer units forming the (meth)acrylic polymer block (aB).

The Mn of the (meth) acrylic polymer block (aB) (Mn (aB)) is not particularly limited but, from points of view such as the handleability, fluidity and mechanical characteristics of the obtainable active energy ray curable composition, is preferably in the range of 500 to 1,000,000, and more preferably in the range of 1,000 to 300,000.

The (meth)acrylic diblock copolymer (B) includes a (meth)acrylic polymer block (bB) having no active energy ray curable groups. The (meth)acrylic polymer block (bB) is a polymer block which includes monomer units formed by polymerizing a monomer (s) including a (meth) acrylate ester and has no active energy ray curable groups described hereinabove.

Specific examples and preferred examples of the (meth)acrylate esters are similar to those described with respect to the (meth)acrylic polymer block (bA). The (meth)acrylate esters may be used singly, or two or more may be used in combination.

In the (meth)acrylic polymer block (bB), the content of the monomer units derived from the (meth)acrylate ester is preferably not less than 90 mol%, and more preferably not less than 95 mol% relative to all the monomer units forming the (meth)acrylic polymer block (bB).

The (meth) acrylic polymer block (bB) may include monomer units derived from a monomer other than the (meth)acrylate esters described above. Specific examples of the additional monomers are similar to those described with respect to the (meth)acrylic polymer block (bA). Such additional monomers may be used singly, or two or more may be used in combination.

In the (meth) acrylic polymer block (bB), the content of the monomer units derived from the additional monomer is preferably not more than 10 mol%, and more preferably not more than 5 mol% relative to all the monomer units forming the (meth)acrylic polymer block (bB).

The Mn of the (meth) acrylic polymer block (bB) (Mn (bB)) is not particularly limited but, from points of view such as the handleability, fluidity and mechanical characteristics of the obtainable (meth)acrylic diblock copolymer (B), is preferably in the range of 3,000 to 2,000,000, and more preferably in the range of 5,000 to 1,000,000.

In the (meth) acrylic diblock copolymer (B), the ratio of the mass of the (meth)acrylic polymer block (aB) to the mass of the (meth) acrylic polymer block (bB) ((meth) acrylic polymer block (aB):(meth)acrylic polymer block (bB)) is not particularly limited but is preferably 90 : 10 to 2 : 98. When the proportion of the (meth)acrylic polymer block (aB) in the (meth) acrylic diblock copolymer (B) is 2 mass% or above, good curability with active energy rays is obtained. Good viscoelasticity is obtained when the proportion is 90 mass% or less.

The Mn of the (meth) acrylic diblock copolymer (B) (Mn (B)) is not particularly limited but, from points of view such as handleability, fluidity and mechanical characteristics, is preferably in the range of 3,500 to 3,000,000, and more preferably in the range of 6,000 to 1,300,000.

The molecular weight distribution (Mw/Mn) of the (meth) acrylic diblock copolymer (B) is preferably in the range of 1.02 to 2.00, more preferably in the range of 1.05 to 1.80, and still more preferably in the range of 1.10 to 1.50.

In the (meth) acrylic diblock copolymer (B), the content of the partial structures (1) is preferably in the range of 0.05 to 20 mol%, more preferably in the range of 1 to 15 mol%, and still more preferably in the range of 1.5 to 10 mol% relative to all the monomer units forming the (meth)acrylic diblock copolymer (B).

From the point of view of curing rate, the number of the partial structures (1) present in the (meth)acrylic diblock copolymer (B) is preferably not less than 2, and more preferably not less than 4 per molecule of the polymer.

In the (meth)acrylic diblock copolymer (B), the (meth)acrylic polymer block (aB) may have the active energy

ray curable group containing the partial structure (1), at the end of the (meth)acrylic diblock copolymer (B) or in a side chain of the (meth) acrylic polymer block (aB). To ensure that as many partial structures (1) as desired will be introduced, it is preferable that such a curable group be located at least in a side chain of the (meth)acrylic polymer block (aB).

The (meth)acrylic diblock polymer (B), because of its structural units being similar to those in the (meth)acrylic triblock copolymer (A), exhibits higher compatibility with the (meth)acrylic triblock copolymer (A) than general reactive diluents. Consequently, the active energy ray curable composition that is obtained gives cured products having good transparency and mechanical properties.

The (meth)acrylic triblock copolymer (A) and the (meth)acrylic diblock copolymer (B) in the invention may be produced by any methods without limitation. Anionic polymerization or radical polymerization is preferable. From the point of view of the control of polymerization, living anionic polymerization or living radical polymerization is more preferable, and living anionic polymerization is still more preferable.

Examples of the living radical polymerization processes include polymerization using a chain transfer agent such as polysulfide, polymerization using a cobalt porphyrin complex, polymerization using a nitroxide (see WO 2004/014926), polymerization using a higher-period hetero element compound such as an organotellurium compound (see Japanese Patent No. 3839829), reversible addition-fragmentation chain transfer (RAFT) polymerization (see Japanese Patent No. 3639859), and atom transfer radical polymerization (ATRP) (see Japanese Patent No. 3040172 and WO 2004/013192). Of these living radical polymerization processes, atom transfer radical polymerization is preferable. A more preferred process is atom transfer radical polymerization which uses an organic halide or a halogenated sulfonyl compound as an initiator and is catalyzed by a metal complex having at least one central metal selected from Fe, Ru, Ni and Cu.

Examples of the living anionic polymerization processes include living polymerization using an organic rare earth metal complex as a polymerization initiator (see JP-A-H06-93060), living anionic polymerization performed with an organic alkali metal compound as a polymerization initiator in the presence of a mineral acid salt such as an alkali metal or alkaline earth metal salt (see JP-A-H05-507737), and living anionic polymerization performed with an organic alkali metal compound as a polymerization initiator in the presence of an organoaluminum compound (see JP-A-H11-335432 and WO 2013/141105). Of these living anionic polymerization processes, living anionic polymerization performed with an organic alkali metal compound as a polymerization initiator in the presence of an organoaluminum compound is advantageous in that direct and efficient polymerization is possible of a (meth)acrylic triblock copolymer (A) which includes a (meth)acrylic polymer block (aA) containing a partial structure (1) and a (meth)acrylic diblock copolymer (B) which includes a (meth)acrylic polymer block (aB) containing a partial structure (1) . For the same reason, a more preferred process is living anionic polymerization performed with an organolithium compound as a polymerization initiator in the presence of an organoaluminum compound and a Lewis base.

Examples of the organoaluminum compounds include those organoaluminum compounds represented by the following general formula (A-1) or (A-2).

$$AlR^7(R^8)(R^9) \qquad (A\text{-}1)$$

(In the formula, $R^7$ is a monovalent saturated hydrocarbon group, a monovalent aromatic hydrocarbon group, an alkoxy group, an aryloxy group or an N,N-disubstituted amino group, and $R^8$ and $R^9$ are each independently an aryloxy group or $R^8$ and $R^9$ are bonded to each other to form an arylenedioxy group.)

$$AlR^{10}(R^{11})(R^{12}) \qquad (A\text{-}2)$$

(In the formula, $R^{10}$ is an aryloxy group, and $R^{11}$ and $R^{12}$ are each independently a monovalent saturated hydrocarbon group, a monovalent aromatic hydrocarbon group, an alkoxy group or an N,N-disubstituted amino group.)

Examples of the aryloxy groups represented by $R^7$, $R^8$, $R^9$ and $R^{10}$ independently in the general formulae (A-1) and (A-2) include phenoxy group, 2-methylphenoxy group, 4-methylphenoxy group, 2, 6-dimethylphenoxy group, 2,4-di-t-butylphenoxy group, 2,6-di-t-butylphenoxy group, 2,6-di-t-butyl-4-methylphenoxy group, 2,6-di-t-butyl-4-ethylphenoxy group, 2,6-diphenylphenoxy group, 1-naphthoxy group, 2-naphthoxy group, 9-phenanthryloxy group, 1-pyrenyloxy group and 7-methoxy-2-naphthoxy group.

Examples of the arylenedioxy groups formed by $R^8$ and $R^9$ bonded to each other in the general formula (A-1) include functional groups derived from compounds having two phenolic hydroxyl groups by the removal of the hydrogen atoms of the two phenolic hydroxyl groups, such as 2,2'-biphenol, 2,2'-methylenebisphenol, 2,2'-methylenebis(4-methyl-6-t-butylphenol), (R)-(+)-1,1'-bi-2-naphthol and (S)-(-)-1,1'-bi-2-naphthol.

The aryloxy groups and the arylenedioxy groups described above may be substituted by a substituent in place of one or more hydrogen atoms. Examples of the substituents include alkoxy groups such as methoxy group, ethoxy group, isopropoxy group and t-butoxy group; and halogen atoms such as chlorine and bromine.

Referring to $R^7$, $R^{11}$ and $R^{12}$ in the general formulae (A-1) and (A-2), examples of the monovalent saturated

hydrocarbon groups include alkyl groups such as methyl group, ethyl group, n-propyl group, isopropyl group, n-butyl group, isobutyl group, sec-butyl group, t-butyl group, 2-methylbutyl group, 3-methylbutyl group, n-octyl group and 2-ethylhexyl group, and cycloalkyl groups such as cyclohexyl group; examples of the monovalent aromatic hydrocarbon groups include aryl groups such as phenyl group, and aralkyl groups such as benzyl group; examples of the alkoxy groups include methoxy group, ethoxy group, isopropoxy group and t-butoxy group; and examples of the N,N-disubstituted amino groups include dialkylamino groups such as dimethylamino group, diethylamino group and diisopropylamino group, and bis(trimethylsilyl)amino group. The monovalent saturated hydrocarbon groups, the monovalent aromatic hydrocarbon groups, the alkoxy groups and the N,N-disubstituted amino groups described above may be substituted by a substituent in place of one or more hydrogen atoms. Examples of the substituents include alkoxy groups such as methoxy group, ethoxy group, isopropoxy group and t-butoxy group; and halogen atoms such as chlorine and bromine.

Examples of the organoaluminum compounds (A-1) include ethylbis(2,6-di-t-butyl-4-methylphenoxy)aluminum, ethylbis(2,6-di-t-butylphenoxy)aluminum, ethyl[2,2'-methylenebis(4-methyl-6-t-butylphenoxy)]aluminu m, isobutylbis(2,6-di-t-butyl-4-methylphenoxy)aluminum, isobutylbis(2,6-di-t-butylphenoxy)aluminum, isobutyl[2,2'-methylenebis(4-methyl-6-t-butylphenoxy)]alum inum, n-octylbis(2,6-di-t-butyl-4-methylphenoxy)aluminum, n-octylbis(2,6-di-t-butylphenoxy)aluminum, n-octyl[2,2'-methylenebis(4-methyl-6-t-butylphenoxy)]alumi num, methoxybis(2,6-di-t-butyl-4-methylphenoxy)aluminum, methoxybis(2,6-di-t-butylphenoxy)aluminum, methoxy[2,2'-methylenebis(4-methyl-6-t-butylphenoxy)]alumi num, ethoxybis(2,6-di-t-butyl-4-methylphenoxy)aluminum, ethoxybis(2,6-di-t-butylphenoxy)aluminum, ethoxy[2,2'-methylenebis(4-methyl-6-t-butylphenoxy)]alumin um, isopropoxybis(2,6-di-t-butyl-4-methylphenoxy)aluminum, isopropoxybis(2,6-di-t-butylphenoxy)aluminum, isopropoxy[2,2'-methylenebis(4-methyl-6-t-butylphenoxy)]al uminum, t-butoxybis(2,6-di-t-butyl-4-methylphenoxy)aluminum, t-butoxybis(2,6-di-t-butylphenoxy)aluminum, t-butoxy[2,2'-methylenebis(4-methyl-6-t-butylphenoxy)]alum inum, tris(2,6-di-t-butyl-4-methylphenoxy)aluminum and tris(2,6-diphenylphenoxy)aluminum. From points of view such as polymerization initiation efficiency, living properties of polymer end anions, availability and easy handling, preferred compounds, among others, are isobutylbis(2,6-di-t-butyl-4-methylphenoxy)aluminum, isobutylbis(2,6-di-t-butylphenoxy)aluminum and isobutyl[2,2'-methylenebis(4-methyl-6-t-butylphenoxy)]alum inum.

Examples of the organoaluminum compounds (A-2) include diethyl(2,6-di-t-butyl-4-methylphenoxy)aluminum, diethyl(2,6-di-t-butylphenoxy)aluminum, diisobutyl(2,6-di-t-butyl-4-methylphenoxy)aluminum, diisobutyl(2,6-di-t-butylphenoxy)aluminum, di-n-octyl(2,6-di-t-butyl-4-methylphenoxy)aluminum and di-n-octyl(2,6-di-t-butylphenoxy)aluminum. The organoaluminum compounds may be used singly, or two or more may be used in combination.

Examples of the Lewis bases include compounds having an ether bond and/or a tertiary amine structure (-R-N(R'-)-R"-. R, R' and R" are divalent organic groups) in the molecule.

Examples of the compounds having an ether bond in the molecule which are used as the Lewis bases include ethers. From the points of view of high polymerization initiation efficiency and living properties of polymer end anions, preferred ethers are cyclic ethers having two or more ether bonds in the molecule or noncyclic ethers having one or more ether bonds in the molecule. Examples of the cyclic ethers having two or more ether bonds in the molecule include crown ethers such as 12-crown-4, 15-crown-5, and 18-crown-6. Examples of the noncyclic ethers having one or more ether bonds in the molecule include noncyclic monoethers such as dimethyl ether, diethyl ether, diisopropyl ether, dibutyl ether and anisole; noncyclic diethers such as 1,2-dimethoxyethane, 1,2-diethoxyethane, 1,2-diisopropoxyethane, 1,2-dibutoxyethane, 1,2-diphenoxyethane, 1,2-dimethoxypropane, 1,2-diethoxypropane, 1,2-diisopropoxypropane, 1,2-dibutoxypropane, 1,2-diphenoxypropane, 1,3-dimethoxypropane, 1,3-diethoxypropane, 1,3-diisopropoxypropane, 1,3-dibutoxypropane, 1,3-diphenoxypropane, 1,4-dimethoxybutane, 1,4-diethoxybutane, 1,4-diisopropoxybutane, 1,4-dibutoxybutane and 1,4-diphenoxybutane; and noncyclic polyethers such as diethylene glycol dimethyl ether, dipropylene glycol dimethyl ether, dibutylene glycol dimethyl ether, diethylene glycol diethyl ether, dipropylene glycol diethyl ether, dibutylene glycol diethyl ether, triethylene glycol dimethyl ether, tripropylene glycol dimethyl ether, tributylene glycol dimethyl ether, triethylene glycol diethyl ether, tripropylene glycol diethyl ether, tributylene glycol diethyl ether, tetraethylene glycol dimethyl ether, tetrapropylene glycol dimethyl ether, tetrabutylene glycol dimethyl ether, tetraethylene glycol diethyl ether, tetrapropylene glycol diethyl ether and tetrabutylene glycol diethyl ether. From points of view such as side reaction control and availability, noncyclic ethers having one or two ether bonds in the molecule are preferable, and diethyl ether or 1,2-dimethoxyethane is more preferable.

Examples of the compounds having a tertiary amine structure in the molecule which are used as the Lewis bases include tertiary polyamines. The tertiary polyamines are compounds having two or more tertiary amine structures in the molecule. Examples of the tertiary polyamines include chain polyamines such as N,N,N',N'-tetramethylethylenediamine, N,N,N',N'-tetraethylethylenediamine, N,N,N',N",N"-pentamethyldiethylenetriamine, 1,1,4,7,10,10-hexamethyltriethylenetetramine and tris[2-(dimethylamino)ethyl]amine; nonaromatic heterocyclic compounds such as 1,3,5-trimethylhexahydro-1,3,5-triazine, 1,4,7-trimethyl-1,4,7-triazacyclononane and 1,4,7,10,13,16-hexamethyl-1,4,7,10,13,16-hexaazacyclooctad ecane; and aromatic heterocyclic compounds such as 2,2'-bipyridyl and 2,2':6',2"-terpyridine.

The Lewis base may be a compound which has one or more ether bonds and one or more tertiary amine structures in the molecule. Examples of such compounds include tris[2-(2-methoxyethoxy)ethyl]amine.

The Lewis bases may be used singly, or two or more may be used in combination.

Examples of the organolithium compounds include t-butyllithium, 1,1-dimethylpropyllithium, 1,1-diphenylhexyllithium, 1,l-diphenyl-3-methylpentyllithium, ethyl α-lithioisobutyrate, butyl α-lithioisobutyrate, methyl α-lithioisobutyrate, isopropyllithium, sec-butyllithium, 1-methylbutyllithium, 2-ethylpropyllithium, 1-methylpentyllithium, cyclohexyllithium, diphenylmethyllithium, α-methylbenzyllithium, methyllithium, n-propyllithium, n-butyllithium and n-pentyllithium. From the points of view of availability and anionic polymerization initiating ability, preferred compounds are organolithium compounds with 3 to 40 carbon atoms which have a chemical structure having a secondary carbon atom as the anionic center, such as isopropyllithium, sec-butyllithium, 1-methylbutyllithium, 1-methylpentyllithium, cyclohexyllithium, diphenylmethyllithium and α-methylbenzyllithium, with sec-butyllithium being particularly preferable. The organolithium compounds may be used singly, or two or more may be used in combination.

To perform the anionic polymerization at a controlled temperature and to render the system uniform so that the anionic polymerization will take place smoothly, the living anionic polymerization is preferably performed in the presence of an organic solvent. From points of view such as safety, immiscibility with water used for washing of the reaction mixture liquid after the anionic polymerization, and ease in recovery and reuse, preferred organic solvents, among others, are hydrocarbons such as toluene, xylene, cyclohexane and methylcyclohexane; halogenated hydrocarbons such as chloroform, methylene chloride and carbon tetrachloride; and esters such as dimethyl phthalate. The organic solvents may be used singly, or two or more may be used in combination. To ensure that the anionic polymerization will take place smoothly, it is preferable that the organic solvent be dried and be deaerated in the presence of an inert gas beforehand.

In the living anionic polymerization, additives may be added to the anionic polymerization system as required. Examples of such additives include inorganic salts such as lithium chloride; metal alkoxides such as lithium methoxyethoxyethoxide and potassium t-butoxide; tetraethylammonium chloride and tetraethylphosphonium bromide.

The living anionic polymerization is preferably performed at -30 to 25°C. At below -30°C, the polymerization rate is decreased and the productivity tends to be deteriorated. If, on the other hand, the temperature is above 25°C, it tends to be difficult to perform the polymerization of (meth) acrylic polymer blocks (a) containing a partial structure (1) with good living properties.

The living anionic polymerization is preferably performed in an atmosphere of an inert gas such as nitrogen, argon or helium. Further, it is preferable that the polymerization be conducted while performing sufficient stirring so that the polymerization reaction system will be rendered uniform.

In the living anionic polymerization, the organolithium compound, the organoaluminum compound, the Lewis base and the monomer are preferably added to the reaction system in such a manner that the Lewis base is brought into contact with the organoaluminum compound before contact with the organolithium compound. The organoaluminum compound may be added to the reaction system before or at the same time with the monomer. When the organoaluminum compound and the monomer are added to the reaction system at the same time, the organoaluminum compound may be mixed together with the monomer beforehand and the mixture may be added.

In the production of the (meth) acrylic triblock copolymer (A) or the (meth)acrylic diblock copolymer (B), the introduction of active energy ray curable groups containing a partial structure (1) is not limited to the above-described method in which the monomer(s) including a di(meth)acrylate (3) is polymerized to form a (meth) acrylic polymer block (aA) or a (meth)acrylic polymer block (aB). An alternative method is such that a polymer block containing a partial structure that is a precursor of a partial structure (1) (hereinafter, written as "precursor structure") is formed first and thereafter the precursor structure is converted into a partial structure (1). Such a polymer block containing a precursor structure may be obtained by polymerizing a monomer(s) including a compound which has a polymerizable functional group and a precursor structure. Examples of the polymerizable functional groups include styryl group, 1,3-dienyl group, vinyloxy group and (meth)acryloyl group, with (meth)acryloyl group being preferable. Examples of the precursor structures include hydroxyl groups, hydroxyl groups protected with a protective group (such as a silyloxy group, an acyloxy group or an alkoxy group), isocyanate groups, amino groups, amino groups protected with a protective group, thiol groups, and thiol groups protected with a protective group.

A polymer block which includes a hydroxyl group as the precursor structure may be reacted with a compound which has a partial structure (1) and a partial structure reactive with the hydroxyl group (such as a carboxylic acid, an ester or a carbonyl halide) to form a (meth)acrylic polymer block (aA) or a (meth) acrylic polymer block (aB). A polymer block which includes a hydroxyl group protected with a protective group as the precursor structure may be deprotected and the resultant hydroxyl group may be reacted in the similar manner as described above to form a (meth)acrylic polymer block (aA) or a (meth)acrylic polymer block (aB).

A polymer block which includes an isocyanate group as the precursor structure may be reacted with a compound which has a partial structure (1) and a partial structure reactive with the isocyanate group (such as a hydroxyl group) to form a (meth)acrylic polymer block (aA) or a (meth)acrylic polymer block (aB).

A polymer block which includes an amino group as the precursor structure may be reacted with a compound which has a partial structure (1) and a partial structure reactive with the amino group (such as a carboxylic acid, a carboxylic anhydride, an ester, a carbonyl halide, an aldehyde group or an isocyanate group) to form a (meth) acrylic

polymer block (aA) or a (meth) acrylic polymer block (aB). A polymer block which includes an amino group protected with a protective group as the precursor structure may be deprotected and the resultant amino group may be reacted in the similar manner as described above to form a (meth)acrylic polymer block (aA) or a (meth)acrylic polymer block (aB).

A polymer block which includes a thiol group as the precursor structure may be reacted with a compound which has a partial structure (1) and a partial structure reactive with the thiol group (such as a carboxylic acid, a carboxylic anhydride, an ester, a carbonyl halide, an isocyanate group or a carbon-carbon double bond) to form a (meth) acrylic polymer block (aA) or a (meth) acrylic polymer block (aB). A polymer block which includes a thiol group protected with a protective group as the precursor structure may be deprotected and the resultant thiol group may be reacted in the similar manner as described above to form a (meth) acrylic polymer block (aA) or a (meth)acrylic polymer block (aB).

The (meth) acrylic diblock copolymer (B) may be obtained by partially terminating the polymerization of the (meth)acrylic triblock copolymer (A) in such a manner that the polymerizable active end is deactivated when the sequential formation of a (meth)acrylic polymer block (aA) and a (meth) acrylic polymer block (bA) has completed. Specifically, the polymerization may be performed in such a manner that part of the polymerizable active ends are deactivated and the monomers are polymerized onto the remaining polymerizable active ends to form the (meth) acrylic triblock copolymer (A), thereby obtaining a mixture of the (meth)acrylic triblock copolymer (A) and the (meth) acrylic diblock copolymer (B). In this manner, the active energy ray curable composition of the invention may be produced with good efficiency. Examples of the methods for deactivating the polymerizable active ends include the addition of an appropriate amount of a known terminator (such as an alcohol), and stirring for a prescribed time after the depletion of the monomers in the polymerization system.

Alternatively, the (meth)acrylic diblock copolymer (B) may be obtained by polymerizing a (meth) acrylic block copolymer containing a precursor structure, specifically, forming a (meth)acrylic polymer block having a precursor structure and a (meth)acrylic polymer block (bA) sequentially, then deactivating the polymerizable active end, and converting the precursor structure into a partial structure (1). In this case, the polymerization may be performed in such a manner that part of the polymerizable active ends are deactivated and the polymerization is continued onto the remaining polymerizable active ends to form a precursor of the (meth)acrylic triblock copolymer (A) which contains a precursor structure, thereby obtaining a mixture of a precursor of the (meth) acrylic triblock copolymer (A) and a precursor of the methacrylic diblock copolymer (B). In this manner, the active energy ray curable composition of the invention may be produced with good efficiency. The polymerizable active ends may be deactivated by similar methods as described above for the production of the methacrylic diblock copolymer (B) by deactivating the polymerizable active ends after the formation of a (meth) acrylic polymer block (aA) in the polymerization of the (meth)acrylic triblock copolymer (A).

In the production of the (meth) acrylic triblock copolymer (A) or the (meth)acrylic diblock copolymer (B), the (meth) acrylic polymer block (aA) or the (meth) acrylic polymer block (aB) is preferably formed by the polymerization, typically, the living anionic polymerization of a monomer(s) including a di(meth)acrylate (3). Such a method is advantageous in that active energy ray curable groups containing a partial structure (2) may be introduced easily and directly.

In the active energy ray curable composition of the invention, the ratio of the mass m (A) of the (meth)acrylic triblock copolymer (A) to the mass m (B) of the (meth) acrylic diblock copolymer (B), m (A) /m (B), is not particularly limited. From the points of view of the viscosity and curing rate of the active energy ray curable composition and the flexibility of the obtainable cured products, the ratio is preferably in the range of 99.5/0.5 to 50/50, more preferably in the range of 99/1 to 60/40, and still more preferably in the range of 98/2 to 70/30.

In the active energy ray curable composition of the invention, the ratio of the number average molecular weight Mn (bB) of the (meth) acrylic polymer block (bB) present in the (meth)acrylic diblock copolymer (B) to the number average molecular weight Mn (bA) per block of the (meth) acrylic polymer block(s) (bA) present in the (meth) acrylic triblock copolymer (A), namely, Mn (bB)/Mn (bA), is in the range of 0.2 to 2.0. To ensure that flexibility will be exhibited while low viscosity will be maintained, the ratio is preferably in the range of 0.25 to 1.9, and more preferably in the range of 0.3 to 1.8. In the case where the (meth)acrylic triblock copolymer (A) includes two (meth)acrylic polymer blocks (bA), the number average molecular weights of the two polymer blocks (bA) are averaged to give the Mn (bA) and this average preferably satisfies the above ratio Mn (bB)/Mn (bA).

In the active energy ray curable composition of the invention, the ratio of the Mn of the (meth)acrylic triblock copolymer (A) (Mn (A)) to the Mn of the (meth) acrylic diblock copolymer (B) (Mn (B)), namely, Mn (A)/Mn (B), is preferably in the range of 0.5 to 1000, more preferably in the range of 0.8 to 900, and still more preferably in the range of 1.0 to 800.

The active energy ray curable composition of the invention may further contain a photopolymerization initiator. Examples of the photopolymerization initiators include carbonyl compounds such as acetophenones (for example, 1-hydroxycyclohexyl phenyl ketone, 2,2-dimethoxy-1,2-diphenylet-han-1-one and 2-hydroxy-2-methyl-1-phenylpropan-1-one), benzophenones (for example, benzophenone, benzoylbenzoic acid, hydroxybenzophenone, 3,3'-dimethyl-4-methoxybenzophenone and acrylated benzophenone), Michler's ketones (for example, Michler' s ketone) and benzoins (for example, benzoin, benzoin methyl ether and benzoin isopropyl ether); sulfur compounds such as tetramethylthiuram monosulfide and thioxanthones (for example, thioxanthone and 2-chlorothioxanthone); phosphorus compounds such as acylphosphine oxides (for example, 2,4,6-trimethylbenzoyl-diphenylphosphine oxide and bis(2,4,6-trimethylbenzoyl)-phenylphosphine oxide); titanium compounds such as titanocenes (for example, bis($\eta^5$-2,4-cyclopentadien-1-yl)-bis(2,6-difluoro-3-(1H-pyrr ol-1-yl)-phenyl)titanium); and azo compounds (for example, azobisisobutylnitrile). Of these, acetophenones and benzophenones are preferable. The photopolymerization initiators may be used singly, or two or more may be used in combination.

When the photopolymerization initiator is used, the content thereof is preferably 0.01 to 10 parts by mass, and more preferably 0.05 to 8 parts by mass per 100 parts by mass of the total of the (meth)acrylic triblock copolymer (A) and the (meth)acrylic diblock copolymer (B). When the content is 0.01 parts by mass or above, the active energy ray curable composition tends to attain good curability. When the content is 10 parts by mass or less, the obtainable cured products tend to exhibit good heat resistance.

The active energy ray curable composition of the invention may contain a sensitizer in addition to the photopolymerization initiator. Examples of the sensitizers include n-butylamine, di-n-butylamine, tri-n-butylphosphine, allylthiouric acid, triethylamine and diethylaminoethyl methacrylate. Of these, diethylaminoethyl methacrylate and triethylamine are preferable.

When the photopolymerization initiator is used as a mixture with the sensitizer, the mass ratio of the photopolymerization initiator to the sensitizer is usually 10:90 to 90:10, and preferably 20:80 to 80:20.

Further, the active energy ray curable composition of the invention may contain a reactive diluent which exhibits polymerizability when irradiated with active energy rays and which does not belong to the (meth) acrylic triblock copolymers (A) and the (meth)acrylic diblock copolymers (B). Such reactive diluents are not particularly limited and may be any types of compounds that exhibit polymerizability when irradiated with active energy rays. Examples include styrene derivatives such as styrene, indene, p-methylstyrene, $\alpha$-methylstyrene, p-methoxystyrene, p-tert-butoxystyrene, p-chloromethylstyrene, p-acetoxystyrene and divinylbenzene; fatty acid vinyl esters such as vinyl acetate, vinyl propionate, vinyl butyrate, vinyl caproate, vinyl benzoate and vinyl cinnamate; (meth)acrylic acid derivatives such as methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, stearyl (meth)acrylate, isostearyl (meth)acrylate, benzyl (meth)acrylate, isobornyl (meth)acrylate, bornyl (meth)acrylate, tricyclodecanyl (meth)acrylate, dicyclopentanyl (meth)acrylate, dicyclopentenyloxyethyl (meth)acrylate, 4-butylcyclohexyl (meth)acrylate, 2-hydroxyethyl (meth)acrylate, 2-hydroxypropyl (meth)acrylate, 2-hydroxybutyl (meth)acrylate, 4-hydroxybutyl (meth)acrylate, tetrahydrofurfuryl (meth)acrylate, butoxyethyl (meth)acrylate, ethoxydiethylene glycol (meth)acrylate, phenoxyethyl (meth)acrylate, polyethylene glycol mono(meth)acrylate ester, polypropylene glycol mono(meth)acrylate ester, methoxyethylene glycol (meth)acrylate, ethoxyethyl (meth)acrylate, methoxypolyethylene glycol (meth)acrylate, methoxypolypropylene glycol (meth)acrylate, dimethylaminoethyl (meth)acrylate, diethylaminoethyl (meth)acrylate, 7-amino-3,7-dimethyloctyl (meth)acrylate, 4-(meth)acryloylmorpholine, trimethylolpropane tri(meth)acrylate, trimethylolpropanetrioxyethyl (meth)acrylate, pentaerythritol tri(meth)acrylate, ethylene glycol di(meth)acrylate, triethylene glycol diacrylate, tetraethylene glycol di(meth)acrylate, tricyclodecanediyldimethanol di(meth)acrylate, polyethylene glycol di(meth)acrylate, 1,4-butanediol di(meth)acrylate, 1,6-hexanediol di(meth)acrylate, neopentyl glycol di(meth)acrylate, tripropylene glycol di(meth)acrylate, neopentyl glycol di(meth)acrylate, adduct of bisphenol A diglycidyl ether with (meth)acrylic acid at both ends, pentaerythritol tetra(meth)acrylate, tris(2-hydroxyethyl) isocyanurate tri(meth)acrylate, tris(2-hydroxyethyl) isocyanurate di(meth)acrylate, tricyclodecanedimethanol di (meth) acrylate, di (meth) acrylate of a diol that is an adduct of bisphenol A with ethylene oxide or propylene oxide, di(meth)acrylate of a diol that is an adduct of hydrogenated bisphenol A with ethylene oxide or propylene oxide, epoxy (meth) acrylate that is an adduct of bisphenol A diglycidyl ether with (meth)acrylate, and cyclohexanedimethanol di(meth)acrylate; epoxy acrylate resins such as bisphenol A epoxy acrylate resin, phenol novolak epoxy acrylate resin and cresol novolak epoxy acrylate resin; COOH group-modified epoxy acrylate resins; urethane acrylate resins obtained by the reaction of a urethane resin formed between a polyol (such as polytetramethylene glycol, polyester diol of ethylene glycol and adipic acid, $\varepsilon$-caprolactone-modified polyester diol, polypropylene glycol, polyethylene glycol, polycarbonate diol, hydroxyl-terminated hydrogenated polyisoprene, hydroxyl-terminated polybutadiene or hydroxyl-terminated polyisobutylene) and an organic isocyanate (such as tolylene diisocyanate, isophorone diisocyanate, diphenylmethane diisocyanate, hexamethylene diisocyanate or xylylene diisocyanate), with a hydroxyl group-containing (meth)acrylate {such as hydroxyethyl (meth)acrylate, hydroxypropyl (meth)acrylate, hydroxybutyl (meth)acrylate or pentaerythritol triacrylate}; resins obtained by introducing a (meth) acrylate group to the above polyols via an ester bond; polyester acrylate resins; and epoxy compounds such as epoxidized soybean oil and benzyl epoxystearate. These reactive diluents may be used singly, or two or more may be used in combination.

When the reactive diluent is added to the active energy ray curable composition of the invention, the content thereof is preferably 10 to 90 mass%, and more preferably 20 to 80 mass% from the points of view of the viscosity of the active energy ray curable composition and the mechanical characteristics of cured products obtained by irradiating the active energy ray curable composition with active energy rays.

The active energy ray curable composition of the invention may contain various additives free from active

energy ray curable groups, such as plasticizers, tackifiers, softeners, fillers, stabilizers, pigments and dyes, while still ensuring that the curability of the composition will not be significantly impaired.

The plasticizers may be added to the active energy ray curable composition of the invention for purposes such as, for example, controlling the viscosity of the active energy ray curable composition and controlling the mechanical strength of cured products obtained by curing the active energy ray curable composition. Examples of the plasticizers include phthalate esters such as dibutyl phthalate, diheptyl phthalate, di(2-ethylhexyl) phthalate and butyl benzyl phthalate; nonaromatic dibasic acid esters such as dioctyl adipate, dioctyl sebacate, dibutyl sebacate and isodecyl succinate; aliphatic esters such as butyl oleate and methyl acetylricinoleate; esters of polyalkylene glycols such as diethylene glycol dibenzoate, triethylene glycol dibenzoate and pentaerythritol ester; phosphate esters such as tricresyl phosphate and tributyl phosphate; trimellitate esters; diene (co)polymers such as polybutadiene, butadiene-acrylonitrile copolymer and polychloroprene; polybutene; polyisobutylene; chlorinated paraffins; hydrocarbon oils such as alkyldiphenyls and partially hydrogenated terphenyls; process oils; polyethers such as polyether polyols, for example, polyethylene glycol, polypropylene glycol and polytetramethylene glycol, and derivatives obtained by converting hydroxyl groups of the polyether polyols into ester groups, ether groups or the like; and polyesters obtained from a dibasic acid such as sebacic acid, adipic acid, azelaic acid or phthalic acid, and a dihydric alcohol such as ethylene glycol, diethylene glycol, triethylene glycol, propylene glycol or dipropylene glycol. The plasticizers may be used singly, or two or more may be used in combination.

When the plasticizer is added to the active energy r.ay curable composition of the invention, the content thereof is preferably 5 to 150 parts by mass, more preferably 10 to 120 parts by mass, and still more preferably 20 to 100 parts by mass per 100 parts by mass of the total of the (meth)acrylic triblock copolymer (A) and the (meth) acrylic diblock copolymer (B). When added in 5 parts by mass or more, the plasticizer tends to provide marked effects in the control of properties and characteristics. When the content is 150 parts by mass or less, cured products obtained by curing the active energy ray curable composition tend to attain excellent mechanical strength.

The molecular weight or Mn (number average molecular weight) of the plasticizers is preferably 400 to 15000, more preferably 800 to 10000, and still more preferably 1000 to 8000. The plasticizers may contain functional groups other than active energy ray curable groups (such as, for example, hydroxyl groups, carboxyl groups and halogen groups) or may be free from such functional groups. With the molecular weight or Mn of the plasticizer being not less than 400, the plasticizer is prevented from bleeding out from a cured product of the active energy ray curable composition with time and thus it is possible to maintain the initial properties over a long term. By virtue of the molecular weight or Mn of the plasticizer being 15000 or less, the active energy ray curable composition tends to exhibit good handleability.

The tackifiers may be added to the active energy ray curable composition of the invention for purposes such as, for example, imparting tackiness to cured products obtained from the composition. Examples of the tackifiers include tackifier resins such as coumarone·indene resins, phenolic resins, p-t-butylphenol·acetylene resins, phenol·formaldehyde resins, xylene·formaldehyde resins, aromatic hydrocarbon resins, aliphatic hydrocarbon resins (for example, terpene resins), styrene resins (for example, polystyrene and poly-$\alpha$-methylstyrene), polyhydric alcohol rosin esters, hydrogenated rosins, hydrogenated wood rosins, esters of hydrogenated rosins with monoalcohols or polyhydric alcohols, and turpentine tackifier resins. In particular, preferred tackifiers are aliphatic hydrocarbon resins (for example, terpene resins), polyhydric alcohol rosin esters, hydrogenated rosins, hydrogenated wood rosins, and esters of hydrogenated rosins with monoalcohols or polyhydric alcohols.

These additives free from active energy ray curable groups may be organic compounds or inorganic compounds.

The active energy rays may be applied with known devices. In the case of electron beams (EB), the accelerating voltage and the amount of radiation are appropriately in the range of 0.1 to 10 MeV and in the range of 1 to 500 kGy, respectively.

Ultraviolet lights may be applied with devices such as high-pressure mercury lamps which emit 150-450 nm wavelength lights, ultrahigh-pressure mercury lamps, carbon arc lamps, metal halide lamps, xenon lamps, chemical lamps and LEDs. The cumulative dose of the active energy rays is usually in the range of 10 to 20000 $mJ/cm^2$, and preferably in the range of 30 to 5000 $mJ/cm^2$. Irradiation with less than 10 $mJ/cm^2$ tends to result in insufficient curing of the active energy ray curable composition. The active energy ray curable composition may be degraded if the cumulative dose is greater than 20000 $mJ/cm^2$.

To prevent the decomposition of the active energy ray curable composition of the invention, the irradiation of the active energy ray curable composition with active energy rays preferably takes place at a relative humidity of not more than 30%, and more preferably not more than 10%.

During or after the irradiation of the inventive active energy ray curable composition with active energy rays, heating may be performed as required to accelerate the curing. The heating temperature is preferably in the range of 40 to 130°C, and more preferably in the range of 50 to 100°C.

After the active energy ray curable composition of the invention used as an adhesive, a coating or the like has been applied onto a substrate and been cured, the cured product may be easily released and separated from the substrate as required such as when the product is to be disposed of. From the points of view of workability and cost, a

preferred releasing method is hygrothermal decomposition.

The hygrothermal decomposition temperature is preferably 100 to 250°C, and more preferably 130 to 220°C.

The hygrothermal decomposition relative humidity is preferably 10 to 100%, and more preferably 30 to 100%. The hygrothermal decomposition time is preferably 1 minute to 24 hours, more preferably 1 minute to 5 hours, and still more preferably 1 minute to 2 hours.

Examples of the use applications of the active energy ray curable compositions of the invention include curable resins, adhesives and pressure-sensitive adhesives, tapes, films, sheets, mats, sealing materials, sealants, coating materials, potting materials, inks, printing plate materials, vibration-insulating materials, foams, heat radiators, prepregs, gaskets and packings used in such fields as automobiles, home appliances, buildings, civil engineering, sports, displays, optical recording devices, optical equipment, semiconductors, batteries and printing.

More specific examples of these applications include:

adhesives and pressure-sensitive adhesives (hot melt adhesives and photocurable adhesives) for polypropylenes, metals, timbers and the like;

sealing materials for hard disk drives (HDDs), buildings, automobiles, electric and electronic components for flexible printed electronics (such as solar cell backsides), and the like;

sealants for purposes such as antirust, moistureproof and waterproof used for HDDs, buildings, automobiles, flexible printed electronics, electric and electronic components (such as solar cell backsides), and the like;

electrical insulating materials such as insulating covering materials for wires and cables;

coating materials such as metal deposition film undercoats, hard coats and optical fiber coats; inks such as LED curable inks, UV curable inks, electron beam curable inks and inkjet inks; airtight sealing materials such as gaskets, packings, vibration-insulating rubbers, fenders, glass vibration preventing materials, sealants for wire glass and laminated glass end faces (cut sections), window seal gaskets and door glass gaskets used for automobiles, railway vehicles, aircrafts and industrial facility or equipment;

marine vessel applications such as vibration-damping materials for engine rooms and instrument rooms;

automobile applications such as vibration-damping materials for engines (oil pans, front covers, rocker covers), bodies (dashes, floors, doors, roofs, panels, wheelhouses), transmissions, parking brake covers and seat backs;

chassis parts such as vibration-insulating and soundproof engine and suspension rubbers (in particular, engine mount rubbers);

engine parts such as hoses for purposes such as cooling, fuel supply and exhaust control, and engine oil sealing materials;

exhaust gas cleaning equipment parts;

brake parts;

home appliance parts such as packings, O-rings and belts (ornaments, waterproof packings, vibration-insulating rubbers and insect-proof packings for lighting apparatuses; vibration-insulating and sound-absorbing materials and air sealing materials for cleaners; drip-proof covers, waterproof packings, heater packings, electrode packings and safety valve diaphragms for electric water heaters; hoses, waterproof packings and solenoid valves for liquor heaters; waterproof packings, water supply tank packings, water suction valves, water tray packings, connection hoses, belts, warmer/heater packings, steam outlet seals and the like for steam ovens and jar rice cookers; oil packings, O-rings, drain packings, pressure tubes, air tubes, blowing or suction packings, vibration-insulating rubbers, oil supply port packings, oil meter packings, oil feed tubes, diaphragm valves, flues and the like for combustors; and speaker gaskets, speaker edges, turntable sheets, belts, pulleys and the like for audio equipment);

building applications such as structural gaskets (zipper gaskets), air-inflated membrane structure roofing materials, waterproof materials, shaped sealing materials, vibration-insulating materials, soundproof materials, setting blocks and sliding materials;

sports applications such as sporting floors (such as all-weather surface materials and gymnasium floors), athletic shoes members (such as shoe sole materials and insole materials), and balls for ball games (such as golf balls);

architecture applications such as roofs, floors, shutters, curtain rails, floorings, pipe ducts, deck plates, curtain walls, stairs, doors, vibration isolators and vibration-damping materials for structural members;

civil engineering applications such as structural materials (such as rubber expansion joints, bearings, water stop plates, waterproof sheets, rubber dams, elastic pavements, vibration-insulating pads and protectors), construction secondary materials (such as rubber molds, rubber packers, rubber skirts, sponge mats, mortar hoses and mortar strainers), construction auxiliary materials (such as rubber sheets and air hoses), safety measure products (such as rubber buoys and wave-dissipating materials) and environmental protection products (such as oil fences, silt fences, antifouling materials, marine hoses, dredging hoses and oil skimmers);

sealants, adhesives, optically clear resins (OCRs), optically clear adhesives (OCAs) and fillers for displays such as liquid crystal displays, color PDPs (plasma displays), plasma addressed liquid crystal (PALC) displays, organic EL (electroluminescence) displays, organic TFT (organic thin film transistor) displays, field emission displays (FEDs),

electronic papers, touch panels, mobile phone displays and car navigation displays;
disk substrate materials, pickup lenses, protective films, sealants and adhesives for video disks (VDs), CDs, CD-ROMs, CD-Rs, CD-RWs, DVDs, DVD-ROMs, DVD-Rs, DVD-RWs, BDs, BD-ROMs, BD-Rs, BD-REs, MOs, MDs, phase-change disks (PDs), holograms and optical cards;
lenses, finder prisms, optical fibers, target prisms, finder covers, light-receiving sensor units, protective films, ferrules, sealants and adhesives for optical devices (still cameras, video cameras, projectors and optical sensors);
solar cell parts such as component sealants, front glass protective films and adhesives;
electric and electronic equipment applications such as vibration-damping materials for stepping motors, magnetic disks, hard disks, dishwashers, dryers, washing machines, fan heaters, sewing machines, vending machines, speaker frames, BS antennas and VTR covers;
camera and office equipment applications such as vibration-damping materials for TV cameras, copiers, computers, printers, registers and cabinets;
substrate materials in optoelectronic integrated circuit (OEIC) peripheries;
heat spreaders;
thermal interfaces that transfer heat between heating elements and heat spreaders and between heat spreaders and cooling members;
hot parts such as electronic devices including heaters, temperature sensors, CPUs and transistors;
heatsinks such as heat dissipating fins, and cooling members such as graphite sheets (graphite films), liquid ceramics and Peltier devices;
thermal conductive materials;
semiconductor resists (UV resists, deep UV resists, EB resists, electrodeposition resists, dry film resists) for semiconductor circuits used in fields such as the home appliance and automobile electronic fields (such as circuit pattern formation, and heat-resistant covers during soldering of printed circuit boards);
liquid solder resists for printed wiring boards;
electrodeposition resists for printed circuit boards, build-up boards and three-dimensional circuit boards;
dry film resists for circuit formation on single-sided, double-sided, or multilayered boards;
photoresists for liquid crystals such as for TFT wirings and for color filters;
permanent resist applications such as insulation coatings; and other resist applications;
adhesives and pressure-sensitive adhesives for semiconductor dicing tapes and die-bonding tapes;
resist materials for the microlithography of LSI and VLSI materials;
LED sealants and die-bonding materials, and sealants for LED-mounted reflective and radiative substrates;
lighting apparatuses for decorative displays;
signs or indicators;
vibration-insulating materials, vibration-damping materials, soundproof materials and seismic isolation materials, for example, industrial machinery-related applications such as vibration-damping materials for shooters, elevators, escalators, conveyors, tractors, bulldozers, power generators, compressors, containers, hoppers, soundproof boxes and mower motor covers; railway applications such as vibration-damping materials for railway vehicle roofs, side plates, doors, underfloor materials, various auxiliary covers and bridges; and semiconductor applications such as vibration-damping materials for precision vibration controlling units;
foaming agents such as thermal insulation materials, cushioning materials, sound-absorbing materials, vibration-insulating materials, artificial leathers, casting materials, molding materials and potting materials; and
prepregs used in, for example, leisure applications such as golf shafts, fishing rods and boats, FRP applications, automobile, aircraft and space applications, interlayer insulation applications in rotating machines, transformers and controllers, and bonding of industrial products and electronic components.

EXAMPLES

The present invention will be described in detail based on Examples and Comparative Examples hereinbelow without limiting the scope of the invention to such Examples.

In Synthetic Examples, raw materials that were used had been dried and purified by known methods and deaerated in nitrogen. They were transferred and fed in a nitrogen atmosphere.

[Monomer consumption rate]

The rate of consumption of a monomer after polymerization was calculated in the following manner. 0.5 ml of the polymerization reaction liquid sampled from the polymerization system was added to 0.5 ml of methanol, thereby preparing 1.0 ml of a mixture liquid. 0.1 ml of the mixture liquid was dissolved into 0.5 ml of deuterated chloroform. The solution was analyzed by $^1$H-NMR. The consumption rate was calculated based on the change in ratio of the integral of

a peak assigned to the proton directly bonded to the carbon-carbon double bond of the (meth) acrylate ester used as the monomer (chemical shift 6.08-6.10) to the integral of a peak assigned to the proton directly bonded to the aromatic ring of toluene used as the solvent (chemical shift 7.00-7.38 ppm).
$^{1}$H-NMR apparatus and measurement conditions
Apparatus: nuclear magnetic resonance apparatus "JNM-ECX400" manufactured by JEOL Ltd.
Temperature: 25°C

[Number average molecular weight (Mn) and molecular weight distribution (Mw/Mn)]

A polymer obtained was analyzed by GPC (gel permeation chromatography) to determine the number average molecular weight (Mn) and the weight average molecular weight (Mw) relative to polystyrene standards, and the molecular weight distribution (Mw/Mn).

GPC apparatus and measurement conditions

Apparatus: GPC apparatus "HLC-8220GPC" manufactured by TOSOH CORPORATION
Separation columns: "TSKgel Super Multipore HZ-M (column diameter = 4.6 mm, column length = 15 cm) " manufactured by TOSOH CORPORATION (Two columns were connected in series.)
Eluent: tetrahydrofuran
Eluent flow rate: 0.35 ml/min
Column temperature: 40°C
Detection method: differential refractive index (RI)

[Polymerization initiation efficiency]

The polymerization initiation efficiency (F1) in the step (1) was calculated using the following equation wherein Mn (R1) was the number average molecular weight of a polymer actually obtained in the step (1) and Mn (I1) was the Mn (calculated value) of a polymer obtained in the step (1) with 100% polymerization initiation efficiency.

$$F1\ (\%) = 100 \times Mn\ (I1)/Mn\ (R1)$$

[Block efficiency between step (1) and step (2)]

The block efficiency (F2) between the step (1) and the step (2) was calculated using the following equation wherein Mn (R2) was the number average molecular weight of a block copolymer actually obtained in the step (2) and Mn (I2) was the Mn (calculated value) of a block copolymer obtained in the step (2) with 100% polymerization initiation efficiency.

$$F2\ (\%) = 10000 \cdot \{Mn\ (I2) - Mn\ (I1)\}/[F1 \cdot \{Mn\ (R2) - Mn\ (R1)\}]$$

[Mn of polymer block (bA) and polymer block (bB)]

These values were obtained by subtracting the number average molecular weight of a polymer obtained in the step (1) (Mn (R1)) from the number average molecular weight of a block copolymer obtained in the step (2) (Mn (R2)).
In Synthetic Example 7, the difference between the number average molecular weight (Mn (R2)) and the number average molecular weight (Mn (R1)) was determined in the similar manner as above, and the Mn of a polymer block (bA) in a (meth) acrylic triblock copolymer (A) and the Mn of a polymer block (bB) in a (meth) acrylic diblock copolymer (B) in a polymer composition (C1) were each deemed to be equal to the difference.

[Contents (mol%) of partial structures (1) in (meth)acrylic triblock copolymer (A) and (meth)acrylic diblock copolymer (B)]

A (meth) acrylic triblock copolymer (A) or a (meth) acrylic diblock copolymer (B) obtained was dissolved in 0.5

ml of deuterated chloroform and the solution was analyzed by $^1$H-NMR. The content was calculated based on the ratio of the integrals of peaks.

The apparatus and conditions of $^1$H-NMR measurement were the same as described above with respect to the calculation of the monomer consumption rate.

[Synthetic Example 1]

(Step (1))

The inside of a 3 L flask was dried and purged with nitrogen, and 1.5 L of toluene was added to the flask. While stirring the solution in the flask, there were sequentially added 7.4 ml (27.3 mmol) of 1,1,4,7,10,10-hexamethyltriethylenetetramine as a Lewis base and 63.6 ml (28.6 mmol) of a 0.450 mol/L toluene solution of isobutylbis(2,6-di-t-butyl-4-methylphenoxy)aluminum as an organoaluminum compound. The mixture was cooled to -20°C. Further, 20 ml (26.0 mmol) of a 1.30 mol/L cyclohexane solution of sec-butyllithium as an organolithium compound was added, followed by the addition at once of 33.6 ml of a mixture which included 17 ml (78 mmol) of 2-(trimethylsilyloxy)ethyl methacrylate and 16.6 ml (156 mmol) of methyl methacrylate as monomers. Anionic polymerization was thus initiated. After the completion of the addition of the monomers, the polymerization reaction liquid turned from original yellow to colorless in 80 minutes. The liquid was stirred for another 20 minutes, and the reaction liquid was sampled.

In the step (1), the rates of consumption of 2-(trimethylsilyloxy)ethyl methacrylate and methyl methacrylate were 100%. The polymer obtained had a Mn (Mn (R1)) of 1,300 and a Mw/Mn of 1.15. Further, the polymerization initiation efficiency (F1) in the step (1) was 98%.

(Step (2))

Subsequently, while stirring the reaction liquid at -20°C, 31.8 ml (14.3 mmol) of a 0.450 mol/L toluene solution of isobutylbis(2,6-di-t-butyl-4-methylphenoxy)aluminum as an organoaluminum compound was added. After 1 minute thereafter, 504 ml (3.5 mol) of n-butyl acrylate as a monomer was added at a rate of 10 ml/min. Immediately after the completion of the addition of the monomer, the reaction liquid was sampled.

In the step (2), the rate of consumption of n-butyl acrylate was 100%. The polymer obtained had a Mn (Mn (R2)) of 21, 300 and a Mw/Mn of 1.18. Further, the block efficiency (F2) between the step (1) and the step (2) was 100%.

(Step (3))

Subsequently, while stirring the reaction liquid at -20°C, 29.2 ml of a mixture which included 14.8 ml (67.8 mmol) of 2- (trimethylsilyloxy.) ethyl methacrylate and 14. 4 ml (136 mmol) of methyl methacrylate as monomers was added at once. The mixture was heated to 20°C at a heatup rate of 2°C/min. After 60 minutes after the completion of the addition of the monomers, the reaction liquid was sampled.

In the step (3), the rates of consumption of 2-(trimethylsilyloxy)ethyl methacrylate and methyl methacrylate were 100%. The polymer obtained had a Mn of 22, 800 and a Mw/Mn of 1.17.

(Step (4))

Subsequently, while stirring the reaction liquid at 20°C, 100 ml of methanol was added to terminate the anionic polymerization.

Next, 22 ml (267 mmol) of dichloroacetic acid was added to the reaction liquid, and the mixture was stirred at room temperature for 30 minutes. The resultant solution was poured into 10 L of methanol to precipitate a polymer, which was recovered by filtration and dried at 100°C and 30 Pa. Consequently, 467 g of a polymer was recovered.

In a 3 L flask, the polymer obtained above was dissolved with 1.5 L of toluene. 97 ml (696 mmol) of triethylamine was added. The mixture was cooled in an ice water bath. 67 ml (692 mmol) of methacryloyl chloride was added dropwise, and the mixture was stirred for 2 hours. The reaction liquid was sampled and was analyzed by $^1$H-NMR, which showed that the reaction degree was 95%. Thereafter, 50 ml of methanol was added to terminate the reaction. To remove the amine salt precipitate from the solution after the reaction, the liquid was suction filtered. Next, toluene was evaporated from the filtrate, and 1.5 L of chloroform was added. The mixture was washed with an aqueous sodium hydrogen carbonate solution and the chloroform phase was suction filtered. Next, the chloroform phase was washed with saturated brine three times. The chloroform phase was dried by the addition of magnesium sulfate. Chloroform, triethylamine and methacrylic acid were evaporated at 70°C. As a result, 415 g of a (meth)acrylic triblock copolymer (A) (hereinafter, written as " (meth) acrylic triblock copolymer (A1)") was obtained.

The (meth)acrylic triblock copolymer (A1) had a Mn of 23,100, a Mw/Mn of 1.19 and a content of partial structures

(1) of 3.7 mol%.

[Synthetic Example 2]

(Step (1))

The,inside of a 3 L flask was dried and purged with nitrogen, and 1.5 L of toluene was added to the flask. While stirring the solution in the flask, there were sequentially added 7.4 ml (27.3 mmol) of 1,1,4,7,10,10-hexamethyltriethylenetetramine as a Lewis base and 63.6 ml (28.6 mmol) of a 0.450 mol/L toluene solution of isobutylbis(2,6-di-t-butyl-4-methylphenoxy)aluminum as an organoaluminum compound. The mixture was cooled to -20°C. Further, 20 ml (26.0 mmol) of a 1.30 mol/L cyclohexane solution of sec-butyllithium as an organolithium compound was added, followed by the addition at once of 35.3 ml of a mixture which included 18.7 ml (78 mmol) of 1,1-dimethylpropane-1,3-diol dimethacrylate and 16.6 ml (156 mmol) of methyl methacrylate as monomers. Anionic polymerization was thus initiated. After the completion of the addition of the mixture, the polymerization reaction liquid turned from original yellow to colorless in 80 minutes. The liquid was stirred for another 20 minutes, and the reaction liquid was sampled.

In the step (1), the rates of consumption of 1,1-dimethylpropane-1,3-diol dimethacrylate and methyl methacrylate were 100%. The polymer obtained had a Mn (Mn (R1)) of 1,340 and a Mw/Mn of 1.16. Further, the polymerization initiation efficiency (F1) in the step (1) was 99%.

(Step (2))

Subsequently, while stirring the reaction liquid at -20°C, 31.8 ml (14.3 mmol) of a 0.450 mol/L toluene solution of isobutylbis(2,6-di-t-butyl-4-methylphenoxy)aluminum as an organoaluminum compound was added. After 1 minute thereafter, 504 ml (3.5 mol) of n-butyl acrylate as a monomer was added at a rate of 10 ml/min. Immediately after the completion of the addition of the monomer, the reaction liquid was sampled.

In the step (2), the rate of consumption of n-butyl acrylate was 100%. The polymer obtained had a Mn (Mn (R2)) of 21,300 and a Mw/Mn of 1.18. Further, the block efficiency (F2) between the step (1) and the step (2) was 100%.

(Step (3))

Subsequently, while stirring the reaction liquid at -20°C, 30.7 ml of a mixture which included 16.3 ml (67.8 mmol) of 1,1-dimethylpropane-1,3-diol dimethacrylate and 14.4 ml (136 mmol) of methyl methacrylate as monomers was added at once. The mixture was heated to 20°C at a heatup rate of 2°C/min. After 60 minutes after the completion of the addition of the monomers, the reaction liquid was sampled.

In the step (3), the rates of consumption of 1,1-dimethylpropane-1,3-diol dimethacrylate and methyl methacrylate were 100%.

(Step (4))

Subsequently, while stirring the reaction liquid at 20°C, 100 ml of methanol was added to terminate the anionic polymerization. The resultant solution was poured into 10 L of methanol to precipitate a polymer, which was recovered by filtration and dried at 100°C and 30 Pa. Consequently, 471 g of a (meth)acrylic triblock copolymer (A) (hereinafter, written as "(meth)acrylic triblock copolymer (A2)") was obtained.

The (meth)acrylic triblock copolymer (A2) had a Mn of 22,600, a Mw/Mn of 1.19 and a content of partial structures (1) of 3.7 mol%.

[Synthetic Example 3]

(Step (1))

The inside of a 3 L flask was dried and purged with nitrogen, and 1.5 L of toluene was added to the flask. While stirring the solution in the flask, there were sequentially added 3.7 ml (13.7 mmol) of 1,1,4,7,10,10-hexamethyltriethylenetetramine as a Lewis base and 36.1 ml (16.2 mol) of a 0.450 mol/L toluene solution of isobutylbis(2,6-di-t-butyl-4-methylphenoxy)aluminum as an organoaluminum compound. The mixture was cooled to -20°C. Further, 10 ml (13.0 mmol) of a 1.30 mol/L cyclohexane solution of sec-butyllithium as an organolithium compound was added, followed by the addition at once of 22.8 ml of a mixture which included 18.7 ml (78.0 mmol) of 1,1-dimethylpropane-1,3-diol dimethacrylate and 4.1 ml (39.0 mmol) of methyl methacrylate as monomers. Anionic polymerization

was thus initiated. After the completion of the addition of the monomers, the polymerization reaction liquid turned from original yellow to colorless in 280 minutes. The liquid was stirred for another 20 minutes, and the reaction liquid was sampled.

In the step (1), the rates of consumption of 1,1-dimethylpropane-1,3-diol dimethacrylate and methyl methacrylate were 100%. The polymer obtained in the step (1) had a Mn (Mn (R1)) of 1,780 and a Mw/Mn of 1.15. Further, the polymerization initiation efficiency (F1) in the step (1) was 98%.

(Step (2))

Subsequently, while stirring the reaction liquid at -20°C, 15.9 ml (7.2 mol) of a 0.450 mol/L toluene solution of isobutylbis(2,6-di-t-butyl-4-methylphenoxy)aluminum as an organoaluminum compound was added. After 1 minute thereafter, 501 ml (3.48 mol) of n-butyl acrylate as a monomer was added at a rate of 5 ml/min. Immediately after the completion of the addition of n-butyl acrylate, the reaction liquid was sampled.

In the step (2), the rate of consumption of n-butyl acrylate was 100%. The polymer obtained had a Mn (Mn (R2)) of 44, 600 and a Mw/Mn of 1.18. Further, the block efficiency (F2) between the step (1) and the step (2) was 100%.

(Step (3))

Subsequently, while stirring the reaction liquid at -20°C, 19.7 ml of a mixture which included 16.1 ml (67.1 mmol) of 1,1-dimethylpropane-1,3-diol dimethacrylate and 3.6 ml (33.6 mmol) of methyl methacrylate as monomers was added at once. The mixture was heated to 10°C at a heatup rate of 2°C/min. After 300 minutes after the completion of the addition of the monomers, the reaction liquid was sampled.

In the step (3), the rates of consumption of 1,1-dimethylpropane-1,3-diol dimethacrylate and methyl methacrylate were 100%.

(Step (4))

Subsequently, while stirring the reaction liquid at 20°C, 100 ml of methanol was added to terminate the anionic polymerization. The resultant solution was poured into 10 L of methanol to precipitate a polymer, which was recovered by filtration and dried at 100°C and 30 Pa. Consequently, 487 g of a (meth)acrylic triblock copolymer (A) (hereinafter, written as "(meth)acrylic triblock copolymer (A3)") was obtained.

The (meth)acrylic triblock copolymer (A3) had a Mn of 46,300, a Mw/Mn of 1.23 and a content of partial structures (1) of 3.9 mol%.

[Synthetic Example 4]

(Step (1))

The inside of a 3 L flask was dried and purged with nitrogen, and 1.5 L of toluene was added to the flask. While stirring the solution in the flask, there were sequentially added 7.4 ml (27.3 mmol) of 1,1,4,7,10,10-hexamethyltriethylenetetramine as a Lewis base and 63.6 ml (28.6 mol) of a 0.450 mol/L toluene solution of isobutylbis(2,6-di-t-butyl-4-methylphenoxy)aluminum as an organoaluminum compound. The mixture was cooled to -20°C. Further, 20 ml (26.0 mol) of a 1.30 mol/L cyclohexane solution of sec-butyllithium as an organolithium compound was added, followed by the addition at once of 33.6 ml of a mixture which included 17 ml (78.0 mmol) of 2-(trimethylsilyloxy)ethyl methacrylate and 16.6 ml (156 mmol) of methyl methacrylate as monomers. Anionic polymerization was thus initiated. After the completion of the addition of the monomers, the polymerization reaction liquid turned from original yellow to colorless in 80 minutes. The liquid was stirred for another 20 minutes, and the reaction liquid was sampled.

In the step (1), the rates of consumption of 2-(trimethylsilyloxy)ethyl methacrylate and methyl methacrylate were 100%. The polymer obtained had a Mn (Mn (R1)) of 1,300 and a Mw/Mn of 1.15. Further, the polymerization initiation efficiency (F1) in the step (1) was 98%.

(Step (2))

Subsequently, while stirring the reaction liquid at -20°C, 31.8 ml (14.3 mol) of a 0.450 mol/L-toluene solution of isobutylbis(2,6-di-t-butyl-4-methylphenoxy)aluminum as an organoaluminum compound was added. After 1 minute thereafter, 504 ml (3.5 mol) of n-butyl acrylate as a monomer was added at a rate of 10 ml/min. The reaction liquid was stirred and, after 1 minute after the completion of the addition of the monomer, 100 ml of methanol was added to terminate the anionic polymerization.

In the step (2), the rate of consumption of n-butyl acrylate was 100%. The polymer obtained had a Mn (Mn (R2)) of 21, 300 and a Mw/Mn of 1.18. Further, the block efficiency (F2) between the step (1) and the step (2) was 100%.

(Step (3))

22 ml (267 mmol) of dichloroacetic acid was added to the reaction liquid, and the mixture was stirred at room temperature for 30 minutes. The resultant solution was poured into 10 L of methanol to precipitate a polymer, which was recovered by filtration and dried at 100°C and 30 Pa. Consequently, 441 g of a polymer was recovered.

In a 3 L flask, the polymer obtained above was dissolved with 1.5 L of toluene. 97 ml (696 mol) of triethylamine was added. The mixture was cooled in an ice water bath. 67 ml (692 mol) of methacryloyl chloride was added dropwise, and the mixture was stirred for 2 hours. The reaction liquid was sampled and was analyzed by $^1$H-NMR, which showed that the reaction degree was 98%.

Thereafter, 50 ml of methanol was added to terminate the reaction.

To remove the amine salt precipitate from the solution after the reaction, suction filtration was performed two times. Next, toluene was removed from the filtrate by being allowed to vaporize at room temperature. To remove the residual amine salt, liquid separation was performed with chloroform and an aqueous sodium hydrogen carbonate solution in such a manner that the aqueous phase was disposed of and the chloroform phase was suction filtered. This purification was performed two times. Next, purification was performed by repeating liquid separation with chloroform and brine three times. After the purification by liquid separation, the organic phase was dried by the addition of magnesium sulfate. Lastly, chloroform and residual triethylamine and acrylic acid were removed by vaporization while performing heating at 70°C. As a result, 392 g of a (meth)acrylic diblock copolymer (B) (hereinafter, written as "(meth)acrylic diblock copolymer (B1)") was obtained.

The (meth) acrylic diblock copolymer (B1) had a Mn of 21500, a Mw/Mn of 1.17 and a content of partial structures (1) of 2.1 mol%.

[Synthetic Example 5]

The step (1) and the step (2) were performed in the same manner as in Synthetic Example 2. Subsequently, while stirring the reaction liquid, 100 ml of methanol was added at -20°C to terminate the anionic polymerization. The resultant solution was poured into 10 L of methanol to precipitate a polymer, which was recovered by filtration and dried at 100°C and 30 Pa. Consequently, 449 g of a (meth)acrylic diblock copolymer (B) (hereinafter, written as "(meth)acrylic diblock copolymer (B2)") was obtained.

In the step (1), the rates of consumption of 1,1-dimethylpropane-1,3-diol dimethacrylate and methyl methacrylate were 100%. The polymer obtained in the step (1) had a Mn (Mn (R1)) of 1, 380 and a Mw/Mn of 1.18. Further, the polymerization initiation efficiency (F1) in the step (1) was 99%. Further, the polymerization initiation efficiency (F1) in the step (1) was 99%.

In the step (2), the rate of consumption of n-butyl acrylate was 100%. Further, the block efficiency (F2) between the step (1) and the step (2) was 100%. The (meth)acrylic diblock copolymer (B2) had a Mn of 21, 600, a Mw/Mn of 1.19 and a content of partial structures (1) of 2.1 mol%.

[Synthetic Example 6]

The step (1) and the step (2) were performed in the same manner as in Synthetic Example 3. Subsequently, while stirring the reaction liquid, 100 ml of methanol was added at -20°C to terminate the anionic polymerization. The resultant solution was poured into 10 L of methanol to precipitate a polymer, which was recovered by filtration and dried at 100°C and 30 Pa. Consequently, 431 g of a (meth)acrylic diblock copolymer (B) (hereinafter, written as "(meth)acrylic diblock copolymer (B3)") was obtained.

In the step (1), the rates of consumption of 1,1-dimethylpropane-1,3-diol dimethacrylate and methyl methacrylate were 100%. The polymer obtained had a Mn of 1,810 and a Mw/Mn of 1.15. Further, the polymerization initiation efficiency (F1) was 98%.

In the step (2), the rate of consumption of n-butyl acrylate was 100%. Further, the block efficiency (F2) between the step (1) and the step (2) was 100%. The (meth)acrylic diblock copolymer (B3) had a Mn of 44, 800, a Mw/Mn of 1.17 and a content of partial structures (1) of 2.2 mol%.

[Synthetic Example 7]

(Step (1))

The inside of a 3 L flask was dried and purged with nitrogen, and 1.5 L of toluene was added to the flask. While stirring the solution in the flask, there were sequentially added 7.4 ml (27.3 mmol) of 1,1,4,7,10,10-hexamethyltriethylenetetramine as a Lewis base and 63.6 ml (28.6 mmol) of a 0.450 mol/L toluene solution of isobutylbis(2,6-di-t-butyl-4-methylphenoxy)aluminum as an organoaluminum compound. The mixture was cooled to -20°C. Further, 20 ml (26.0 mmol) of a 1.30 mol/L cyclohexane solution of sec-butyllithium as an organolithium compound was added, followed by the addition at once of 35.3 ml of a mixture which included 18.7 ml (78.0 mmol) of 1,1-dimethylpropane-1,3-diol dimethacrylate and 16.6 ml (156 mmol) of methyl methacrylate as monomers. Anionic polymerization was thus initiated. After the completion of the addition of the monomers, the polymerization reaction liquid turned from original yellow to colorless in 80 minutes. The liquid was stirred for another 20 minutes, and the reaction liquid was sampled.

In the step (1), the rates of consumption of 1,1-dimethylpropane-1,3-diol dimethacrylate and methyl methacrylate were 100%. The polymer obtained in the step (1) had a Mn (Mn (R1)) of 1,410 and a Mw/Mn of 1.15. Further, the polymerization initiation efficiency (F1) in the step (1) was 99%.

(Step (2))

Subsequently, while stirring the reaction liquid at -20°C, 31.8 ml (14.3 mmol) of a 0.450 mol/L toluene solution of isobutylbis(2,6-di-t-butyl-4-methylphenoxy)aluminum as an organoaluminum compound was added. After 1 minute thereafter, 504 ml (3.5 mol) of n-butyl acrylate as a monomer was added at a rate of 10 ml/min. Immediately after the completion of the addition of the monomer, the reaction liquid in the step (2) was sampled.

In the step (2), the rate of consumption of n-butyl acrylate was 100%. The block copolymer obtained had a Mn (Mn (R2)) of 21,500 and a Mw/Mn of 1.19. Further, the block efficiency (F2) between the step (1) and the step (2) was 100%.

(Step (3))

Subsequently, the reaction liquid was stirred at -20°C for 20 minutes. Thereafter, 30.7 ml of a mixture which included 16.3 ml (67.8 mmol) of 1,1-dimethylpropane-1,3-diol dimethacrylate and 14.4 ml (136 mmol) of methyl methacrylate as monomers was added at once. The mixture was heated to 20°C at a heatup rate of 2°C/min. After 60 minutes after the completion of the addition of the monomers, the reaction liquid was sampled.

(Step (4))

Subsequently, while stirring the reaction liquid at 20°C, 100 ml of methanol was added to terminate the anionic polymerization. The resultant solution was poured into 10 L of methanol to precipitate a polymer, which was recovered by filtration and dried at 100°C and 30 Pa. Consequently, 449 g of a polymer composition (hereinafter, written as "polymer composition (C1)") was obtained. In the polymer composition (C1), the content of partial structures (1) was 3.7 mol%.

Compositions obtained by mixing the (meth)acrylic triblock copolymer (A2) and the (meth)acrylic diblock copolymer (B2) with prescribed proportions were analyzed by GPC (gel permeation chromatography, HLC-8220GPC (manufactured by TOSOH CORPORATION), column: TSK-gel Super Multipore HZ-M (manufactured by TOSOH CORPORATION) (column diameter = 4.6 mm, column length = 15 cm), measurement conditions: flow rate = 0.35 ml/min, temperature = 40°C, eluent = tetrahydrofuran). Based on the results, a calibration curve was prepared which indicated a relationship between the mixing ratio (mass ratio) of the (meth)acrylic triblock copolymer (A2) to the (meth) acrylic diblock copolymer (B2) and the GPC peak area ratio. The area ratio obtained by the GPC measurement of the polymer composition (C1) was compared to the calibration curve, and the mixing ratio of the (meth)acrylic triblock copolymer (A) to the (meth)acrylic diblock copolymer (B) in the polymer composition (C1) was determined to be (A)/(B) = 86/14.

[Synthetic Example 8]

The step (1) and the step (2) were performed in the same manner as in Synthetic Example 6, except that in the step (1), addition was made of 20.0 ml of a mixture which included 16.4 ml (68.4 mmol) of 1,1-dimethylpropane-1,3-diol dimethacrylate and 3.63 ml (34.1 mmol) of methyl methacrylate as monomers, and in the step (2), 438 ml (3.05 mol) of n-butyl acrylate as a monomer was added at a rate of 5 ml/min. Subsequently, while stirring the reaction liquid, 100 ml of methanol was added at -20°C to terminate the anionic polymerization. The resultant solution was poured into 10 L of methanol to precipitate a polymer, which was recovered by filtration and dried at 100°C and 30 Pa. Consequently, 372 g of a (meth)acrylic diblock copolymer (B) (hereinafter, written as " (meth) acrylic diblock copolymer (B4)") was

obtained.

In the step (1), the rates of consumption of 1,1-dimethylpropane-1,3-diol dimethacrylate and methyl methacrylate were 100%. The polymer obtained had a Mn of 1,560 and a Mw/Mn of 1.14. Further, the polymerization initiation efficiency (F1) was 98%.

In the step (2), the rate of consumption of n-butyl acrylate was 100%. Further, the block efficiency (F2) between the step (1) and the step (2) was 100%. The (meth)acrylic diblock copolymer (B4) had a Mn of 38, 500, a Mw/Mn of 1.17 and a content of partial structures (1) of 2.2 mol%.

[Synthetic Example 9]

The step (1) and the step (2) were performed in the same manner as in Synthetic Example 2, except that in the step (2), 150 ml (1.0 mol) of n-butyl acrylate as a monomer was added at a rate of 10 ml/min. Subsequently, while stirring the reaction liquid, 100 ml of methanol was added at -20°C to terminate the anionic polymerization. The resultant solution was poured into 10 L of methanol to precipitate a polymer, which was recovered by filtration and dried at 100°C and 30 Pa. Consequently, 132 g of a (meth)acrylic diblock copolymer (B) (hereinafter, written as "(meth)acrylic diblock copolymer (B5)") was obtained.

In the step (1), the rates of consumption of 1,1-dimethylpropane-1,3-diol dimethacrylate and methyl methacrylate were 100%. The polymer obtained in the step (1) had a Mn (Mn (R1)) of 1320 and a Mw/Mn of 1.18. Further, the polymerization initiation efficiency (F1) in the step (1) was 99%. Further, the polymerization initiation efficiency (F1) in the step (1) was 99%.

In the step (2), the rate of consumption of n-butyl acrylate was 100%. Further, the block efficiency (F2) between the step (1) and the step (2) was 100%. The (meth)acrylic diblock copolymer (B5) had a Mn of 7,200, a Mw/Mn of 1.19 and a content of partial structures (1) of 6.3 mol%.

Table 1 below describes the number average molecular weights of the (meth)acrylic polymer blocks, of the block copolymers obtained in Synthetic Examples 1 to 9, having an active energy ray curable group containing a partial structure (1).

[Table 1]

Table 1

| | (Meth)acrylic polymer block having no active energy ray curable groups | |
|---|---|---|
| | Mn (bA) | Mn (bB) |
| (Meth)acrylic triblock copolymer (A1) | 20000 | |
| (Meth)acrylic triblock copolymer (A2) | 19960 | |
| (Meth)acrylic triblock copolymer (A3) | 42820 | |
| (Meth)acrylic diblock copolymer (B1) | | 20000 |
| (Meth)acrylic diblock copolymer (B2) | | 20220 |
| (Meth)acrylic diblock copolymer (B3) | | 42990 |
| (Meth)acrylic diblock copolymer (B4) | | 36940 |
| (Meth)acrylic diblock copolymer (B5) | | 5880 |
| Polymer composition (C1) | 20090 | 20090 |

(Example 1)

A solution was prepared by mixing 100 parts by mass of polymer components including 90 parts by mass of the (meth)acrylic triblock copolymer (A1) from Synthetic Example 1 as the (meth)acrylic triblock copolymer (A) and 10 parts by mass of the (meth) acrylic diblock copolymer (B1) from Synthetic Example 4 as the (meth) acrylic diblock copolymer (B), 2 parts by mass of 1-hydroxycyclohexyl phenyl ketone as a photopolymerization initiator and 100 parts by mass of toluene as a solvent. The solution obtained was subjected to 20°C at atmospheric pressure to remove most of the toluene. Thereafter, the solution was heated at 70°C under a reduced pressure of 30 Pa to remove the toluene completely. An active energy ray curable composition was thus obtained. The active energy ray curable composition was tested by the following methods to evaluate its viscosity and curing rate, and the elastic modulus of cured products. The evaluation results are described in Table 2.

[Viscosity]

The viscosity of the active energy ray curable composition was measured with MARS III manufactured by HAAKE. The measurement mode was steady-flow viscosity measurement mode. The active energy ray curable composition was placed on a 1°-cone plate having a diameter of 35 mm, and η (Pa·s) was measured at a measurement temperature of 25°C, a measurement gap of 0.05 mm and a shear rate of 1 (1/s).

[Curing rate]

The curing rate of the active energy ray curable composition was evaluated with MARS III manufactured by HAAKE. The measurement mode was high-speed OSC time dependent measurement mode. The active energy ray curable composition was applied onto parallel plates having a diameter of 20 mm with a coating thickness of 50 μm. The viscoelasticity was measured at a measurement temperature of 25°C, a measurement gap of 0.15 mm and a measurement frequency of 5 Hz while irradiating the coating with a UV lamp (Omni Cure Series 2000 manufactured by Lumen Dynamics, intensity 150 $mW/cm^2$). The time in which a crossover was reached between the storage shear modulus (G') and the loss shear modulus (G") was measured as an indicator of curing rate.

[Flexibility] Elastic modulus of cured products

The flexibility of the active energy ray curable composition was evaluated as follows. Spacers having a thickness of 1 mm were arranged at the four sides of a release PET film (K1504 manufactured by TOYOBO CO., LTD.). The active energy ray curable composition was poured onto the PET film, and a PET film was placed thereon while avoiding air bubbles. Thereafter, the active energy ray curable composition was cured by applying UV light at 5000 $mJ/cm^2$ onto the release PET film with use of UV irradiation device HTE-3000B INTEGRATOR 814M (manufactured by HI-TECH). The resultant film was tested on a dynamic viscoelastometer ("Rheogel E-4000" manufactured by UBM) to measure the storage elastic modulus with temperature dependent (tensile) mode (frequency: 11 Hz) while increasing the temperature from -100°C to 180°C at a heatup rate of 3°C/min. The storage elastic modulus E' (Pa) at 25°C was obtained as an indicator of flexibility.

(Examples 2 to 5 and 7 to 9)

Active energy ray curable compositions were prepared in the same manner as in Example 1, except that the type and amount of the (meth)acrylic triblock copolymer (A) and the type and amount of the (meth) acrylic diblock copolymer (B) were changed as described in Table 2. The viscosity and curing rate of the active energy ray curable compositions, and the elastic modulus of cured products were evaluated in the similar manner. The evaluation results are described in Table 2.

(Example 6)

An active energy ray curable composition was prepared in the same manner as in Example 1, except that 100 parts by mass of the polymer components were replaced by 100 parts by mass of the polymer composition (C1). The viscosity and curing rate of the active energy ray curable composition, and the elastic modulus of cured products were evaluated in the similar manner. The evaluation results are described in Table 2.

(Reference Examples 1 to 3)

Active energy ray curable compositions were prepared in the same manner as in Example 1, except that the type and amount of the (meth)acrylic triblock copolymer (A) and the type and amount of the (meth) acrylic diblock copolymer (B) were changed as described in Table 3. The viscosity and curing rate of the active energy ray curable compositions, and the elastic modulus of cured products were evaluated in the similar manner. The evaluation results are described in Table 3.

(Comparative Examples 1 to 3)

Active energy ray curable compositions were prepared in the same manner as in Example 1, except that the polymer components were replaced by a (meth) acrylic triblock copolymer (A) described in Table 3. The viscosity and curing rate of the active energy ray curable compositions, and the elastic modulus of cured products were evaluated in the similar manner. The evaluation results are described in Table 3.

(Comparative Examples 4 and 5)

Active energy ray curable compositions were prepared in the same manner as in Example 1, except that the type and amount of the (meth) acrylic triblock copolymer (A) and the type and amount of the (meth) acrylic diblock copolymer (B) were changed as described in Table 3. The viscosity and curing rate of the active energy ray curable compositions, and the elastic modulus of cured products were evaluated in the similar manner. The evaluation results are described in Table 3.

[Table 2]

Table 2

| | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| (Meth)acrylic triblock copolymer | (A1) | 90 | | | | | | | | |
| | (A2) | | 95 | 90 | 60 | | | | 90 | |
| | (A3) | | | | | 90 | | 90 | | 98 |
| (Meth)acrylic diblock copolymer | (B1) | 10 | | | | | | | | |
| | (B2) | | 5 | 10 | 40 | | | 10 | | |
| | (B3) | | | | | 10 | | | | 2 |
| | (B4) | | | | | | | | 10 | |
| | (B5) | | | | | | | | | |
| Polymer composition (C1) | | | | | | | 100 | | | |
| Mn (bB)/Mn (bA) | | 1.0 | 1.0 | 1.0 | 1.0 | 1.0 | 1.0 | 0.47 | 1.9 | 1.0 |
| Viscosity $\eta$ (Pa·s) | | 660 | 590 | 570 | 470 | 1310 | 510 | 1140 | 610 | 610 |
| Curing rate (sec) | | 2.53 | 2.31 | 2.43 | 2.60 | 1.21 | 1.93 | 1.28 | 2.49 | 1.78 |
| Flexibility E' ($\times 10^6$ Pa) | | 0.90 | 0.91 | 0.87 | 0.84 | 3.05 | 0.86 | 2.74 | 0.91 | 0.96 |

[Table 3]

Table 3

| | Ref. Ex. 1 | Ref. Ex. 2 | Ref. Ex. 3 | Comp. Ex. 1 | Comp. Ex. 2 | Comp. Ex. 3 | Comp. Ex. 4 | Comp. Ex. 5 |
|---|---|---|---|---|---|---|---|---|
| (Meth)acrylic triblock copolymer (A1) | 40 | | | 100 | | | | |
| (Meth)acrylic triblock copolymer (A2) | | 30 | | | 100 | | 90 | |
| (Meth)acrylic triblock copolymer (A3) | | | 45 | | | 100 | | 90 |
| (Meth)acrylic diblock copolymer (B1) | 60 | | | | | | | |
| (Meth)acrylic diblock copolymer (B2) | | 70 | | | | | | |
| (Meth)acrylic diblock copolymer (B3) | | | 55 | | | | 10 | |
| (Meth)acrylic diblock copolymer (B4) | | | | | | | | |
| (Meth)acrylic diblock copolymer (B5) | | | | | | | | 10 |

(continued)

| | Ref. Ex. 1 | Ref. Ex. 2 | Ref.Ex. 3 | Comp.Ex. 1 | Comp.Ex. 2 | Comp.Ex. 3 | Comp.Ex. 4 | Comp.Ex. 5 |
|---|---|---|---|---|---|---|---|---|
| Polymer composition (C1) | | | | | | | | |
| Mn (bB)/Mn (bA) | 1.0 | 1.0 | 1.0 | - | - | - | 2.2 | 0.14 |
| Viscosity η (Pa·s) | 610 | 420 | 1210 | 750 | 640 | 1580 | 780 | 1640 |
| Curing rate (sec) | 4.22 | 5.41 | 3.54 | 1.51 | 1.42 | 0.90 | 1.54 | 1.40 |
| Flexibility E' ($\times 10^6$ Pa) | 0.28 | 0.12 | 0.29 | 1.15 | 1.12 | 4.21 | 1.43 | 4.82 |

From Table 2 and Table 3, the active energy ray curable compositions obtained in Examples 1 to 9 attained a low viscosity (namely, excellent workability such as application properties) without suffering a significant deterioration in curing rate, and gave cured products having excellent flexibility as compared to the active energy ray curable compositions from Comparative Examples 1 to 3 which contained the (meth)acrylic triblock copolymer (A) as the only polymer component. The active energy ray curable composition from Comparative Example 4 had a value of Mn (bB)/Mn (bA) exceeding 2.0 and thus showed a high viscosity (namely, poor workability such as application properties) and was poor in flexibility as compared to the active energy ray curable compositions from Examples 2 to 4, Examples 8 and 9, and Reference Example 2 which contained the same (meth)acrylic triblock copolymer (A2). Further, the active energy ray curable composition from Comparative Example 5 had a value of Mn (bB) /Mn (bA) of below 0.2 and thus showed a high viscosity (namely, poor workability such as application properties) and was poor in flexibility as compared to the active energy ray curable compositions from Example 5 and Example 7 which contained the same (meth) acrylic triblock copolymer (A3) in the same proportion.

The active energy ray curable compositions obtained in Reference Examples 1 to 3 exhibited a low viscosity and gave highly flexible cured products similarly to the active energy ray curable compositions from Examples 1 to 9, but their curing rate was lower than in Examples.

## Claims

1. An active energy ray curable composition comprising a (meth) acrylic triblock copolymer (A) including a (meth) acrylic polymer block (s) (aA) having an active energy ray curable group containing a partial structure represented by the following general formula (1), and a (meth)acrylic polymer block(s) (bA) having no active energy ray curable groups, and a (meth) acrylic diblock copolymer (B) including a (meth) acrylic polymer block (aB) having an active energy ray curable group containing a partial structure represented by the following general formula (1), and a (meth)acrylic polymer block (bB) having no active energy ray curable groups, the composition having a ratio of Mn (bB)/Mn (bA) in the range of 0.2 to 2.0 wherein Mn (bB) is the number average molecular weight of the (meth)acrylic polymer block (bB) present in the (meth)acrylic diblock copolymer (B), and Mn (bA) is the number average molecular weight per block of the (meth)acrylic polymer block(s) (bA) present in the (meth)acrylic triblock copolymer (A);

[Chem. 1]

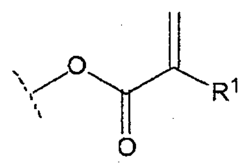

(1)

(wherein $R^1$ is a hydrogen atom or a hydrocarbon group having 1 to 20 carbon atoms).

2. The active energy ray curable composition according to Claim 1, further comprising a photopolymerization initiator.

3. The active energy ray curable composition according to Claim 1 or 2, wherein the active energy ray curable groups present in the (meth) acrylic triblock copolymer (A) and in the (meth)acrylic diblock copolymer (B) contain a partial structure represented by the following general formula (2):

[Chem. 2]

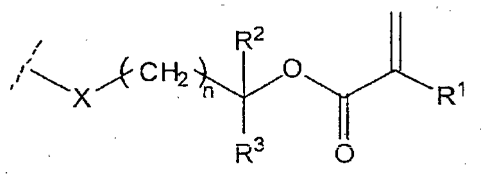

(2)

(wherein $R^1$ is a hydrogen atom or a hydrocarbon group having 1 to 20 carbon atoms, $R^2$ and $R^3$ are each independently a hydrocarbon group having 1 to 6 carbon atoms, X is O, S or $N(R^6)$ ($R^6$ is a hydrogen atom or a hydrocarbon group having 1 to 6 carbon atoms) and n is an integer of 1 to 20).

**INTERNATIONAL SEARCH REPORT**

International application No.
PCT/JP2015/070563

A. CLASSIFICATION OF SUBJECT MATTER
*C08F299/00*(2006.01)i, *C08F8/14*(2006.01)i, *C08F297/02*(2006.01)i

According to International Patent Classification (IPC) or to both national classification and IPC

B. FIELDS SEARCHED

Minimum documentation searched (classification system followed by classification symbols)
C08F299/00, C08F8/14, C08F297/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2011-184678 A (Kaneka Corp.), 22 September 2011 (22.09.2011), claims 1, 4; paragraphs [0002] to [0005], [0038] to [0041], [0077], [0123], [0126]; examples; table 1 (Family: none) | 1,2<br>3 |
| Y | WO 2013/141105 A1 (Kuraray Co., Ltd.), 26 September 2013 (26.09.2013), claims; paragraphs [0006], [0015], [0021], [0024] to [0025]; examples 1 to 8; table 1 & US 2015/0038658 A1 claims; paragraphs [0005], [0014], [0020], [0023] to [0024] & EP 2829559 A1 & CN 104204005 A | 3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 October 2015 (08.10.15) | 20 October 2015 (20.10.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/070563

C (Continuation). DOCUMENTS CONSIDERED TO BE RELEVANT

| Category* | Citation of document, with indication, where appropriate, of the relevant passages | Relevant to claim No. |
|---|---|---|
| A | JP 06-032997 A (NOF Corp.), 08 February 1994 (08.02.1994), entire text (Family: none) | 1-3 |
| P,A | WO 2014/148251 A1 (Kuraray Co., Ltd.), 25 September 2014 (25.09.2014), claims; paragraphs [0001] to [0005], [0041]; each example & TW 201441295 A | 1-3 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011184678 A
- WO 2004014926 A
- JP 3839829 B
- JP 3639859 B
- JP 3040172 B
- WO 2004013192 A
- JP H0693060 A
- JP H05507737 A
- JP H11335432 A
- WO 2013141105 A